(19) Europäisches Patentamt
European Patent Office
Office européen des brevets

(11) **EP 4 213 547 A1**

(12) **EUROPEAN PATENT APPLICATION**
published in accordance with Art. 153(4) EPC

(43) Date of publication:
**19.07.2023 Bulletin 2023/29**

(21) Application number: **20955848.5**

(22) Date of filing: **30.09.2020**

(51) International Patent Classification (IPC):
**H04W 52/02** (2009.01)    **H04W 68/02** (2009.01)

(52) Cooperative Patent Classification (CPC):
**H04W 52/02; H04W 68/02;** Y02D 30/70

(86) International application number:
**PCT/CN2020/119761**

(87) International publication number:
**WO 2022/067828 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **ZHANG, Zhanzhan**
**Shenzhen, Guangdong 518129 (CN)**

• **TIE, Xiaolei**
**Shenzhen, Guangdong 518129 (CN)**
• **HUANG, Wenwen**
**Shenzhen, Guangdong 518129 (CN)**
• **ZHOU, Han**
**Shenzhen, Guangdong 518129 (CN)**
• **XUE, Lixia**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **PAGING INFORMATION SENDING AND MONITORING METHODS AND COMMUNICATION APPARATUS AND SYSTEM**

(57) This application discloses a paging information sending method, a paging information monitoring method, a communication apparatus, and a system. A network device sends first information, where the first information is used by a first terminal device to determine a first paging occasion for monitoring a paging PDCCH in a current paging cycle, and the first information is before a first configured paging occasion or at a time domain resource position the same as that of the first configured paging occasion. The first terminal device receives the first information. The network device sends the paging PDCCH to the first terminal device on the first paging occasion, and the first terminal device receives the paging PDCCH. According to the solution of this application, the network device may dynamically determine, based on an actual situation, a resource on which the terminal device monitors the paging PDCCH, to improve resource utilization. In addition, resource overheads for sending the paging PDCCH and a paging PDSCH by the network device can be reduced by using a PEI indication, so that overheads for sending the PEI by the network device are indirectly reduced.

FIG. 5

**Description**

**TECHNICAL FIELD**

This application relates to the field of communication technologies, and in particular, to a paging information sending method, a paging information monitoring method, a communication apparatus, and a system.

**BACKGROUND**

A terminal device (user equipment, UE) in a radio resource control (radio resource control, RRC) idle (RRC IDLE) mode/an RRC inactive (RRC_INACTIVE) mode mainly performs two tasks: paging (paging) information monitoring and radio resource management (radio resource management, RRM) measurement. The UE usually wakes up from a sleep state to perform paging information monitoring and RRM measurement. Before this, because the UE has been in sleep for long duration, the UE usually performs automatic gain control (automatic gain control, AGC) tuning (AGC tuning) and time-frequency synchronization. In a multi-beam scenario, the UE may further perform beam selection.

The UE implements AGC tuning, time-frequency synchronization, and RRM measurement by receiving a reference signal. In new radio (new radio, NR), in the RRC_IDLE mode/the RRC_INACTIVE mode, the UE performs AGC tuning and time-frequency synchronization based on a synchronization signal/physical broadcast channel block (synchronization signal/physical broadcast channel block, SS/PBCH block) signal. A cycle of an SSB signal in NR is long, and is usually 20 ms. A minimum cycle may be 5 ms, and a maximum cycle may be 160 ms. The UE usually requires one to three SSBs to complete AGC tuning and time-frequency synchronization. Therefore, the UE needs to wake up long duration before a paging occasion (paging occasion, PO), and maintain light sleep or deep sleep between SSBs and between an SSB and the PO. It can be learned that the UE needs to wake up for a plurality of times (involving a plurality of times of switching between the sleep state and a wake-up state), and maintains the wake-up state/a light sleep state for long duration. This causes high power consumption of the UE. Beam selection also causes high power consumption of the UE.

Therefore, a paging early indication (paging early indication, PEI) (which may also be referred to as a wake-up signal (wake-up signal, WUS)) mechanism is introduced. A purpose of introducing the PEI is mainly to notify the UE in advance whether there is paging information, or notify the UE in advance whether there is paging information for the UE, or notify the UE in advance whether the UE is paged. If there is paging information, the UE then monitors the paging information, in other words, monitors a paging physical downlink control channel (physical downlink control channel, PDCCH). If there is no paging information, the UE may enter the sleep state without performing paging information monitoring, and wait for a next discontinuous reception (discontinuous reception, DRX) cycle to wake up to monitor a PEI indication.

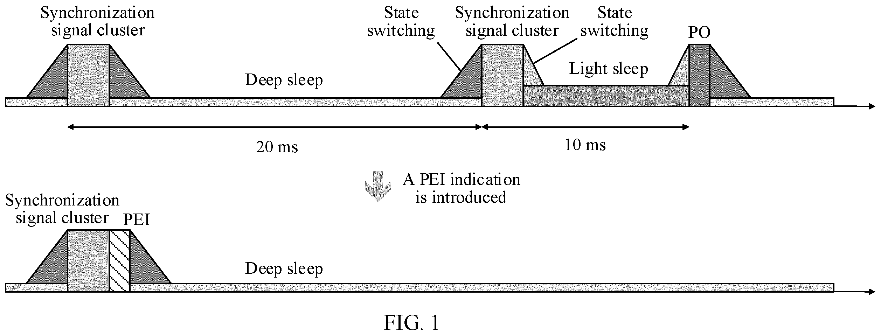

An upper part in FIG. 1 shows behavior that needs to be performed by the UE before the UE performs paging information monitoring on a PO when the PEI is not introduced.

A lower part in FIG. 1 shows that, after the PEI is introduced, if the PEI indicates, to the UE, that there is no paging information, the UE may direct enter the sleep state to reduce power consumption.

It can be learned that introduction of the PEI has the following advantages: When the UE is not paged, power consumption of the UE can be reduced when the UE performs the following behavior:

(1) state switching (switching between deep sleep/light sleep and wake-up); and
(2) maintaining light sleep between two times of wake-up.

However, after the PEI mechanism is introduced, if each UE still monitors a paging PDCCH on a PO configured for the UE, a network device cannot implement flexible resource allocation to improve resource utilization. In addition, the introduction of the PEI indication also increases resource/signaling overheads of the network device.

**SUMMARY**

Embodiments of this application provide a paging information sending method, a paging information monitoring method, a communication apparatus, and a system, so that after a PEI mechanism is introduced, a network device can flexibly allocate a resource on which UE monitors a paging PDCCH, to improve resource utilization.

According to a first aspect, a paging information monitoring method is provided. The method includes: A first terminal device receives first information, where the first information is used by the first terminal device to determine a first paging occasion for monitoring a physical downlink control channel PDCCH in a current paging cycle, the first information is before a first configured paging occasion or at a time domain resource position the same as that of the first configured paging occasion, and the first configured paging occasion is a paging occasion configured by a network device for the first terminal device to monitor the paging PDCCH in the current paging cycle; and the first terminal device monitors the paging PDCCH on the first paging occasion.

With reference to the first aspect, in a possible implementation, the method further includes: The first terminal device receives second information, where the second information indicates the first terminal device whether to monitor the paging PDCCH, and the second information is before the first configured paging occasion or at the time domain resource position the same as that of the first configured paging occasion. That the first terminal device monitors the paging PDCCH on the first paging occasion includes: If the second information indicates the first terminal device to monitor the paging PDCCH, the first terminal device monitors the paging PDCCH on the first paging occasion.

According to a second aspect, a paging information sending method is provided. The method includes: A network device sends first information, where the first information is used by a first terminal device to determine a first paging occasion for monitoring a paging physical downlink control channel PDCCH in a current paging cycle, the first information is before a first configured paging occasion or at a time domain resource position the same as that of the first configured paging occasion, and the first configured paging occasion is a paging occasion configured by the network device for the first terminal device to monitor the paging PDCCH in the current paging cycle; and the network device sends the paging PDCCH to the first terminal device on the first paging occasion.

With reference to the second aspect, in a possible implementation, the method further includes: The network device sends second information, where the second information indicates the first terminal device whether to monitor the paging PDCCH, and the second information is before the first configured paging occasion or at the time domain resource position the same as that of the first configured paging occasion. That the network device sends the paging PDCCH to the first terminal device on the first paging occasion includes: If the second information indicates the first terminal device to monitor the paging PDCCH, the network device sends the paging PDCCH to the first terminal device on the first paging occasion.

With reference to the first aspect, the second aspect, or any implementation of the first aspect or the second aspect, in another possible implementation, the first paging occasion is one of paging occasions configured for at least two groups of terminal devices, and each of the at least two groups of terminal devices corresponds to one or more groups of configured paging occasions.

With reference to the first aspect, the second aspect, or any implementation of the first aspect or the second aspect, in another possible implementation, the first information is before the 1st paging occasion in the paging occasions configured for the at least two groups of terminal devices, or at a time domain resource position the same as that of the 1st paging occasion in the paging occasions configured for the at least two groups of terminal devices.

With reference to the first aspect, the second aspect, or any implementation of the first aspect or the second aspect, in another possible implementation, the second information is before the 1st paging occasion in the paging occasions configured for the at least two groups of terminal devices, or at the time domain resource position the same as that of the 1st paging occasion in the paging occasions configured for the at least two groups of terminal devices.

With reference to the second aspect or any implementation of the second aspect, in another possible implementation, the first information is further used by a second terminal device to determine a second paging occasion for monitoring the paging PDCCH in a current paging cycle of the second terminal device, where the first information is before a second configured paging occasion or at a time domain resource position the same as that of the second configured paging occasion, and the second configured paging occasion is a paging occasion configured by the network device for the second terminal device to monitor the paging PDCCH in the current paging cycle of the second terminal device. The method further includes: The network device sends the paging PDCCH to the second terminal device on the second paging occasion.

With reference to the second aspect or any implementation of the second aspect, in another possible implementation, the second information further indicates the second terminal device whether to monitor the paging PDCCH, and the second information is before the second configured paging occasion or at the time domain resource position the same as that of the second configured paging occasion. That the network device sends the paging PDCCH to the first terminal device on the first paging occasion includes: If the second information indicates the second terminal device to monitor the paging PDCCH, the network device sends the paging PDCCH to the second terminal device on the second paging occasion.

With reference to the first aspect, the second aspect, or any implementation of the first aspect or the second aspect, in another possible implementation, the first terminal device and the second terminal device belong to different groups of terminal device in the at least two groups of terminal devices, and the first paging occasion and the second paging occasion are a same paging occasion.

With reference to the first aspect, the second aspect, or any implementation of the first aspect or the second aspect, in another possible implementation, the first terminal device and the second terminal device belong to a same group of terminal devices in the at least two groups of terminal devices, and the first paging occasion and the second paging occasion are different paging occasions.

With reference to the first aspect, the second aspect, or any implementation of the first aspect or the second aspect, in another possible implementation, the second information indicates the at least two groups of terminal devices whether to monitor the paging PDCCH; the second information indicates each of the at least two groups of terminal devices whether to monitor the paging PDCCH; or the at least two groups of terminal devices are divided into at least three subgroups of terminal devices, and the second information indicates each of the at least three subgroups of terminal devices whether to monitor the paging PDCCH.

With reference to the first aspect, the second aspect, or any implementation of the first aspect or the second aspect, in another possible implementation, there is a first correspondence between a state value of the second information and one group of terminal devices or a combination of a plurality of groups of terminal devices in the at least two groups of terminal devices, or there is a first correspondence between a state value of the second information and an index corresponding to one group of terminal devices or a combination of a plurality of groups of terminal devices in the at least two groups of terminal devices, where the first correspondence is predefined or is configured by using higher layer signaling; or the at least two groups of terminal devices are divided into at least three subgroups of terminal devices, there is a first correspondence between a state value of the second information and one subgroup of terminal devices or a combination of a plurality of subgroups of terminal devices in the at least three subgroups of terminal devices, or there is a first correspondence between a state value of the second information and an index corresponding to one subgroup of terminal devices or a combination of a plurality of subgroups of terminal devices in the at least three subgroups of terminal devices, where the first correspondence is predefined or is configured by using higher layer signaling; and the second information indicates a group of terminal devices or a subgroup of terminal devices that has the first correspondence with the state value of the second information to monitor the paging PDCCH.

With reference to the first aspect, the second aspect, or any implementation of the first aspect or the second aspect, in another possible implementation, when the first information is a first state value, the first paging occasion is a specified paging occasion in the paging occasions configured for the at least two groups of terminal devices, or the first paging occasion is a paging occasion indicated by the first information or the second information in the paging occasions configured for the at least two groups of terminal devices; and when the first information is a second state value, the first paging occasion is the first configured paging occasion.

With reference to the first aspect, the second aspect, or any implementation of the first aspect or the second aspect, in another possible implementation, the first information indicates that the first paging occasion is any one of the paging occasions configured for the at least two groups of terminal devices; or the first information indicates that the first paging occasion is either of the first configured paging occasion and a paging occasion that is before the first configured paging occasion in the paging occasions configured for the at least two groups of terminal devices.

With reference to the first aspect, the second aspect, or any implementation of the first aspect or the second aspect, in another possible implementation, the first information indicates or is for determining a quantity P of paging occasions, on which there is paging information, in the paging occasions configured for the at least two groups of terminal devices, where P is greater than or equal to 0.

With reference to the first aspect, the second aspect, or any implementation of the first aspect or the second aspect, in another possible implementation, the P paging occasions on which there is paging information are first P paging occasions in the paging occasions configured for the at least two groups of terminal devices.

With reference to the first aspect, the second aspect, or any implementation of the first aspect or the second aspect, in another possible implementation, the first information indicates a quantity of paging occasions in a paging frame PF in which the paging occasions configured for the at least two groups of terminal devices are located.

With reference to the first aspect, the second aspect, or any implementation of the first aspect or the second aspect, in another possible implementation, the first information indicates whether there is paging information on each of the paging occasions configured for the at least two groups of terminal devices.

With reference to the first aspect, the second aspect, or any implementation of the first aspect or the second aspect, in another possible implementation, there is a second correspondence between a state value of the first information and one paging occasion or a combination of a plurality of paging occasions in the paging occasions configured for the at least two groups of terminal devices, or there is a second correspondence between a state value of the first information and an index corresponding to one paging occasion or a combination of a plurality of paging occasions in the paging occasions configured for the at least two groups of terminal devices, and the second correspondence is predefined or is configured by using higher layer signaling; and the first information indicates that there is paging information on a paging occasion or a paging occasion in a combination of paging occasions, where the paging occasion or the paging occasion in the combination of paging occasions has the second correspondence with the state value of the first information.

With reference to the first aspect, the second aspect, or any implementation of the first aspect or the second aspect, in another possible implementation, the first paging occasion is an $(x+1)^{th}$ paging occasion in the P paging occasions on which there is paging information, x is greater than or equal to 0, and a value of x is determined by using at least one of the following parameters: an identification number of the first terminal device and a value of P.

With reference to the first aspect, the second aspect, or any implementation of the first aspect or the second aspect, in another possible implementation, there is a third correspondence between an $N^{th}$ paging occasion in the P paging occasions on which there is paging information and one paging occasion or a combination of a plurality of paging occasions in the paging occasions configured for the at least two groups of terminal devices; or there is a third correspondence between an $N^{th}$ paging occasion in the P paging occasions on which there is paging information and an index corresponding to one paging occasion or a combination of a plurality of paging occasions in the paging occasions configured for the at least two groups of terminal devices, and the third correspondence is predefined or is configured by using higher layer signaling; and the first paging occasion is a paging occasion that has the third correspondence with the first configured paging occasion and on which there is paging information.

With reference to the first aspect, the second aspect, or any implementation of the first aspect or the second aspect, in another possible implementation, the first information is downlink control information or a reference signal sequence, and/or the second information is downlink control information or a reference signal sequence.

According to a third aspect, a communication apparatus is provided, and is configured to perform the method according to any one of the first aspect or the possible implementations of the first aspect. The communication apparatus may be the terminal device according to any one of the first aspect or the possible implementations of the first aspect, or may be a module used in the terminal device, for example, a chip or a chip system. The communication apparatus includes a corresponding module, unit, or means (means) for performing the foregoing methods. The module, unit, or means may be implemented by using hardware or software, or may be implemented by using hardware executing corresponding software. The hardware or the software includes at least one module or unit corresponding to the foregoing functions.

With reference to the third aspect, in a possible implementation, the communication apparatus includes a transceiver unit and a processing unit. The transceiver unit is configured to receive first information, where the first information is used by a first terminal device to determine a first paging occasion for monitoring a physical downlink control channel PDCCH in a current paging cycle, the first information is before a first configured paging occasion or at a time domain resource position the same as that of the first configured paging occasion, and the first configured paging occasion is a paging occasion configured by a network device for the first terminal device to monitor the paging PDCCH in the current paging cycle. The processing unit is configured to monitor the paging PDCCH on the first paging occasion.

Optionally, the transceiver unit is further configured to receive second information, where the second information indicates the first terminal device whether to monitor the paging PDCCH, and the second information is before the first configured paging occasion or at the time domain resource position the same as that of the first configured paging occasion. The processing unit is configured to: if the second information indicates the first terminal device to monitor the paging PDCCH, monitor the paging PDCCH on the first paging occasion.

With reference to the third aspect, in another possible implementation, the communication apparatus includes an input interface, an output interface, and a processing circuit. The input interface is configured to receive first information, where the first information is used by a first terminal device to determine a first paging occasion for monitoring a physical downlink control channel PDCCH in a current paging cycle, the first information is before a first configured paging occasion or at a time domain resource position the same as that of the first configured paging occasion, and the first configured paging occasion is a paging occasion configured by a network device for the first terminal device to monitor the paging PDCCH in the current paging cycle. The processing circuit is configured to monitor the paging PDCCH on the first paging occasion.

Optionally, the input interface is further configured to receive second information, where the second information indicates the first terminal device whether to monitor the paging PDCCH, and the second information is before the first configured paging occasion or at the time domain resource position the same as that of the first configured paging occasion. The processing circuit is configured to: if the second information indicates the first terminal device to monitor the paging PDCCH, monitor the paging PDCCH on the first paging occasion.

For example, the communication apparatus further includes a memory. The memory is coupled to at least one processor, and the at least one processor is configured to run program instructions stored in the memory, to enable the communication apparatus to perform the method according to any one of the first aspect or the possible implementations of the first aspect.

In a possible implementation, the memory is configured to store the program instructions and data. The memory is coupled to the at least one processor, and the at least one processor may invoke and execute the program instructions stored in the memory, to enable the communication apparatus to perform the method according to any one of the first aspect or the possible implementations of the first aspect.

For example, the communication apparatus further includes a communication interface. The communication interface is used by the communication apparatus to communicate with another device. When the communication apparatus is a terminal, the communication interface is a transceiver, an input/output interface, a circuit, or the like.

In a possible implementation, the communication apparatus includes at least one processor and a communication interface, configured to perform the method according to any one of the first aspect or the possible implementations of the first aspect. Specifically, the at least one processor is configured to communicate with outside through the communication interface. The at least one processor is configured to run a computer program, to enable the communication apparatus to perform the method according to any one of the first aspect or the possible implementations of the first aspect. It may be understood that the outside may be an object other than the processor, or an object other than the communication apparatus.

In another possible design, the communication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the third aspect, refer to technical effects brought by different design manners in the first aspect. Details are not described herein again.

According to a fourth aspect, a communication apparatus is provided, and is configured to perform the method according to any one of the second aspect or the possible implementations of the second aspect. The communication apparatus may be the first network device according to any one of the second aspect or the possible implementations of the second aspect, or a module used in the first network device, for example, a chip or a chip system. The communication apparatus includes a corresponding module, unit, or means for performing the foregoing methods. The module, unit, or means may be implemented by using hardware or software, or may be implemented by using hardware executing corresponding software. The hardware or the software includes at least one module or unit corresponding to the foregoing functions.

With reference to the fourth aspect, in a possible implementation, the communication apparatus includes a transceiver unit. The transceiver unit is configured to send first information, where the first information is used by a first terminal device to determine a first paging occasion for monitoring a paging physical downlink control channel PDCCH in a current paging cycle, the first information is before a first configured paging occasion or at a time domain resource position the same as that of the first configured paging occasion, and the first configured paging occasion is a paging occasion configured by a network device for the first terminal device to monitor the paging PDCCH in the current paging cycle. The transceiver unit is further configured to send the paging PDCCH to the first terminal device on the first paging occasion.

Optionally, the transceiver unit is further configured to send second information, where the second information indicates the first terminal device whether to monitor the paging PDCCH, and the second information is before the first configured paging occasion or at the time domain resource position the same as that of the first configured paging occasion. The transceiver unit is further configured to: if the second information indicates the first terminal device to monitor the paging PDCCH, send the paging PDCCH to the first terminal device on the first paging occasion.

Optionally, the first information is further used by a second terminal device to determine a second paging occasion for monitoring the paging PDCCH in a current paging cycle of the second terminal device, where the first information is before a second configured paging occasion or at a time domain resource position the same as that of the second configured paging occasion, and the second configured paging occasion is a paging occasion configured by the network device for the second terminal device to monitor the paging PDCCH in the current paging cycle of the second terminal device. The transceiver unit is further configured to send the paging PDCCH to the second terminal device on the second paging occasion.

Optionally, the second information further indicates the second terminal device whether to monitor the paging PDCCH, and the second information is before the second configured paging occasion or at the time domain resource position the same as that of the second configured paging occasion. The transceiver unit is configured to: if the second information indicates the second terminal device to monitor the paging PDCCH, send the paging PDCCH to the second terminal device on the second paging occasion.

With reference to the fourth aspect, in another possible implementation, the communication apparatus includes an input interface, an output interface, and a processing circuit. The output interface is configured to send first information, where the first information is used by a first terminal device to determine a first paging occasion for monitoring a paging physical downlink control channel PDCCH in a current paging cycle, the first information is before a first configured paging occasion or at a time domain resource position the same as that of the first configured paging occasion, and the first configured paging occasion is a paging occasion configured by a network device for the first terminal device to monitor the paging PDCCH in the current paging cycle. The output interface is further configured to send the paging PDCCH to the first terminal device on the first paging occasion.

Optionally, the output interface is further configured to send second information, where the second information indicates the first terminal device whether to monitor the paging PDCCH, and the second information is before the first configured paging occasion or at the time domain resource position the same as that of the first configured paging occasion. The output interface is further configured to: if the second information indicates the first terminal device to monitor the paging PDCCH, send the paging PDCCH to the first terminal device on the first paging occasion.

Optionally, the first information is further used by a second terminal device to determine a second paging occasion for monitoring the paging PDCCH in a current paging cycle of the second terminal device, where the first information is before a second configured paging occasion or at a time domain resource position the same as that of the second configured paging occasion, and the second configured paging occasion is a paging occasion configured by the network device for the second terminal device to monitor the paging PDCCH in the current paging cycle of the second terminal device. The output interface is further configured to send the paging PDCCH to the second terminal device on the second paging occasion.

Optionally, the second information further indicates the second terminal device whether to monitor the paging PDCCH, and the second information is before the second configured paging occasion or at the time domain resource position the same as that of the second configured paging occasion. The output interface is configured to: if the second information indicates the second terminal device to monitor the paging PDCCH, send the paging PDCCH to the second terminal device on the second paging occasion.

For example, the communication apparatus further includes a memory. The memory is coupled to at least one processor, and the at least one processor is configured to run program instructions stored in the memory, to enable the communication apparatus to perform the method according to any one of the second aspect or the possible implementations of the second aspect.

In a possible implementation, the memory is configured to store the program instructions and data. The memory is coupled to the at least one processor, and the at least one processor may invoke and execute the program instructions stored in the memory, to enable the communication apparatus to perform the method according to any one of the second aspect or the possible implementations of the second aspect.

For example, the communication apparatus further includes a communication interface. The communication interface is used by the communication apparatus to communicate with another device. When the communication apparatus is an access network device, the communication interface is a transceiver, an input/output interface, a circuit, or the like.

In a possible implementation, the communication apparatus includes at least one processor and a communication interface, configured to perform the method according to any one of the second aspect or the possible implementations of the second aspect. Specifically, the at least one processor is configured to communicate with outside through the communication interface. The at least one processor is configured to run a computer program, to enable the communication apparatus to perform the method according to any one of the second aspect or the possible implementations of the second aspect. It may be understood that the outside may be an object other than the processor, or an object other than the communication apparatus.

In another possible design, the communication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the fourth aspect, refer to technical effects brought by different design manners in the second aspect. Details are not described herein again.

According to a fifth aspect, a communication system is provided, including the communication apparatus according to any one of the third aspect or the implementations of the third aspect and the communication apparatus according to any one of the fourth aspect or the implementations of the fourth aspect.

According to a sixth aspect, a computer-readable storage medium is provided. The computer-readable storage medium stores instructions, and when the instructions are run on a computer, the computer is enabled to perform the method according to any one of the foregoing aspects or the implementations of the foregoing aspects.

According to a seventh aspect, a computer program product including instructions is provided. When the computer program product runs on a computer, the computer is enabled to perform the method according to any one of the foregoing aspects or the implementations of the foregoing aspects.

According to an eighth aspect, a chip is provided. The chip is coupled to a memory, and performs the method according to any one of the first aspect or the implementations of the first aspect.

According to a ninth aspect, a chip is provided. The chip is coupled to a memory, and performs the method according to any one of the second aspect or the implementations of the second aspect.

It should be noted that "coupling" in embodiments of this application indicates a direct combination or an indirect combination of two components.

## BRIEF DESCRIPTION OF DRAWINGS

FIG. 1 is a schematic diagram of behavior of UE when a PEI is not introduced and after the PEI is introduced;
FIG. 2 is a schematic diagram of a paging occasion;
FIG. 3 is a schematic diagram of an architecture of a communication system to which a method according to an embodiment of this application is applied;
FIG. 4 is a schematic diagram of a hardware structure of a communication apparatus 300 according to an embodiment of this application;

FIG. 5 is a schematic flowchart of a paging information sending method and a paging information monitoring method according to an embodiment of this application;

FIG. 6 is a schematic diagram of a current paging cycle of first UE;

FIG. 7 is a schematic diagram in which second information covers a first configured PO and a second configured PO in a current paging cycle of first UE;

FIG. 8 is a schematic diagram in which first information covers a first configured PO and a second configured PO in a current paging cycle of first UE;

FIG. 9 is a schematic diagram of comparison of monitoring a paging PDCCH by UE before and after this solution is implemented;

FIG. 10 is a schematic diagram of a module structure of a communication apparatus 400 according to an embodiment of this application;

FIG. 11 is a schematic diagram of a module structure of a communication apparatus 500 according to an embodiment of this application;

FIG. 12 is a simplified schematic diagram of a hardware structure of a terminal device 600; and

FIG. 13 is a simplified schematic diagram of a hardware structure of a network device 700.

## DESCRIPTION OF EMBODIMENTS

NR paging mechanism:

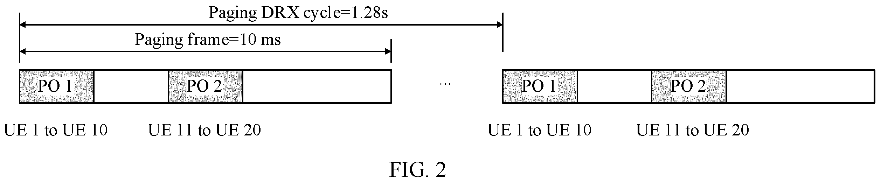

As described above, UE in RRC_IDLE/RRC_INACTIVE mainly performs two tasks: paging information monitoring and RRM measurement. FIG. 2 is a schematic diagram of a paging occasion. A network device configures a paging DRX cycle for UE. In each paging DRX cycle (paging DRX cycle), the UE needs to monitor paging information only on one PO (to be specific, a PO of the UE), and may enter a sleep state without monitoring to the paging information in another case. The PO of the UE is determined based on a user equipment identity (user equipment identity, UE_ID). Therefore, different UEs may have different paging occasions.

A procedure in which the UE monitors the paging information is as follows: The UE monitors a paging physical downlink control channel (physical downlink control channel, PDCCH) on the PO of the UE; and if downlink control information (downlink control information, DCI) carried on the paging PDCCH includes scheduling information for scheduling a physical downlink shared channel (physical downlink shared channel, PDSCH), the UE receives and parses the corresponding PDSCH. The DCI carried on the paging PDCCH may be referred to as paging DCI, and the PDSCH scheduled by using the paging DCI may be referred to as a paging PDSCH. The paging information is usually carried on the paging PDSCH, and the paging DCI may also include a part of the paging information, for example, a short message (short message). The paging DCI usually includes a short message indication field, a short message field, and an information field for scheduling the paging PDSCH. If the UE fails to blindly detect the DCI or blindly detects the DCI on the paging PDCCH, but the paging DCI indicates that no PDSCH is scheduled, the UE considers that there is no paging PDSCH, and then the UE usually enters the sleep state. The UE wakes up to monitor the paging information on a next paging occasion after one paging DRX cycle. It can be learned from the foregoing procedure that the paging information monitoring may alternatively be considered as paging PDCCH monitoring.

The paging PDSCH carries information about the UE, for example, the UE_ID of the UE. After the UE decodes the PDSCH, if a DE_ID carried on the paging PDSCH matches the UE_ID of the UE, it indicates that the UE is paged. Otherwise, the UE is actually not paged, but another UE that also monitors the paging PDCCH on the PO is paged. If the paging DCI indicates that there is a paging message (that is, the PDSCH is scheduled by using the DCI), but the UE is actually not paged, this phenomenon is referred to as paging false alarm (false alarm).

How to determine the PO on which the UE monitors the paging PDCCH?

The UE may calculate, based on information semi-statically configured by the network device and a formula predefined in a protocol, a specific time domain position at which the paging PDCCH is to be monitored.

As shown in FIG. 2, in each DRX cycle, one UE monitors the paging PDCCH only on a PO that is calculated by the UE and that belongs to the UE. In an example in FIG. 2, DRX cycle T=1.28s, and each paging frame (paging frame) includes two POs (which are a PO 1 and a PO 2 in the figure). 10 UEs, namely, UE 1 to UE 10, determine to monitor the paging information on the PO 1. After one cycle, the UE 1 to the UE 10 monitor the paging information on the PO 1 again.

The information semi-statically configured by the network device includes:

- a paging cycle T;
- a quantity N of paging frames included in each paging cycle T (where it is noted that N is not directly configured, but is obtained through calculation by using configuration information);

- a quantity Ns of POs in each paging frame; and
- a paging frame offset PF_offset for calculating a paging frame.

The network device configures the foregoing information by using a system message. For example, the network device adds the foregoing configured information to a system information block 1 (system information block 1, SIB 1).

The UE_ID is also used to calculate the PO of the UE. In NR, the UE_ID is related to a 5G-S-TMSI (SG-System-Architecture-Evolution Temporary Mobile Station Identifier). If the UE does not have the 5G-S-TMSI, UE_ID=0. Otherwise, UE_ID=5G-S-TMSI mod 1024.

A system frame number (system frame number, SFN) of a radio frame (radio frame) (namely, a paging frame) in which the UE monitors the paging information is obtained by using the following formula 1:

$$(SFN+PF\_offset) \bmod T=(T \operatorname{div} N)*(UE\_ID \bmod N)\ldots Formula\ 1$$

The UE monitors an (i_s+1)th PO in the calculated radio frame (whose frame number is SFN), where i_s is obtained by using the following formula 2:

$$i\_s=floor\ (UE\_ID/N) \bmod Ns\ldots Formula\ 2$$

It should be noted that, in the present invention, the PO that is configured for the UE and that is for monitoring the paging PDCCH may also be referred to as "an own PO of the UE", "a PO to which the UE belongs", or "a PO of the UE".

One paging occasion PO includes one or more PDCCH monitoring occasions (PDCCH monitoring occasion(s)), and the PDCCH monitoring occasion is determined based on search space (search space, S S) configured by the network device.

A PO that is configured for the UE and that is for monitoring the paging PDCCH periodically appears. As shown in FIG. 2, a cycle of the PO is a paging DRX cycle. The paging DRX cycle may also be referred to as a paging cycle.

In the present invention, for one UE, a PO that is configured for the UE and that is for monitoring the paging PDCCH may be referred to as a PO, a group of POs, a PO group, or a paging group. In other words, the PO or the group of POs is a PO that periodically appears. However, in each paging DRX cycle, there is only one PO that is configured for the UE and that is for monitoring the paging PDCCH.

Different UEs that are configured on a same PO to monitor the paging PDCCH form a terminal device group. Paging occasions configured for different UEs in a group of terminal devices may correspond to a same group of POs. In this case, paging cycles of the different UEs in the group of UEs are the same. If paging occasions configured for different UEs in a group of UEs correspond to different PO groups, at least two UEs in the group of UEs have different paging cycles.

RRM measurement:

An objective of mobility RRM measurement is to enable UE in RRC_IDLE and RRC_INACTIVE to perform cell selection/reselection (cell selection/reselection), and to enable UE in an RRC connected mode (RRC_CONNECTED) to perform cell handover.

Currently, there are two types of reference signals for RRM measurement: an SSB signal and a channel state information reference signal (channel state information-reference signal, CSI-RS). The SSB signal is a cell-level signal. Therefore, the SSB signal can be used by UE in the RRC idle/inactive/connected mode. However, the CSI-RS signal can be used only by UE in the RRC connected mode. When the UE is in the RRC connected mode, a network device configures, by using RRC signaling, a CSI-RS resource for mobility RRM measurement. When the UE is in the RRC connected mode, a specific signal for RRM measurement (which may be simultaneously based on two signals) is configured by using the RRC signaling. However, when the UE is in the RRC_IDLE mode and the RRC_INACTIVE mode, currently, the UE performs RRM measurement based on only the SSB signal.

When the UE performs RRM measurement based on the SSB signal, if the network device configures an SSB measurement timing configuration (SS/PBCH block measurement timing configuration, SMTC) for the UE, the UE performs the RRM measurement only in SMTC window duration (SMTC window duration). If no SMTC is configured for the UE, the UE assumes that an SSB cycle is 5 ms.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, a system run by reduced capability (REDuced CAPability, REDCAP) UE, or a next-generation communication system, for example, 6G. The 5G mobile communication system involved in this application includes a non-standalone (non-standalone, NSA) 5G mobile communication system or a standalone (standalone, SA) 5G mobile communication system. The technical solutions provided in this application may be further applied to a future communication system, for example, a sixth generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (internet of things, IoT) communication system, an internet of vehicles communication system, or another communication system.

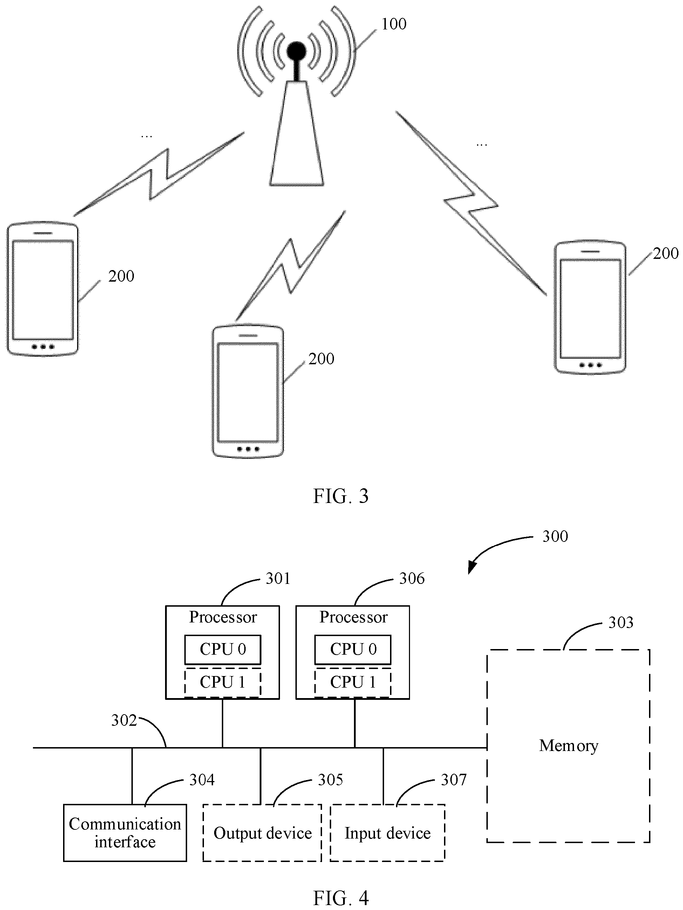

FIG. 3 is a schematic diagram of an architecture of a communication system to which a method according to an embodiment of this application is applied. As shown in FIG. 3, the communication system includes one or more network devices 100 (one network device is used as an example in FIG. 3) and one or more terminal devices 200 connected to the network device 100. The terminal device and the network device may directly communicate with each other, or may communicate with each other through forwarding by another device. This is not specifically limited in this embodiment of this application.

Optionally, the solutions provided in embodiments of this application are applicable to the various communication systems. The following uses a 5G mobile communication system as an example. A network element or an entity corresponding to the network device shown in FIG. 3 may be a next-generation radio access network (next-generation radio access network, NG-RAN) device in the 5G mobile communication system.

Optionally, the terminal device in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved PLMN, or a terminal device in a future internet of vehicles. This is not limited in embodiments of this application.

By way of example, and not limitation, in embodiments of this application, the terminal device may be a mobile phone, a tablet computer, a computer with a wireless transceiver function, a virtual reality terminal, an augmented reality terminal, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like.

By way of example, and not limitation, in embodiments of this application, the wearable device may alternatively be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, in embodiments of this application, the terminal device may alternatively be a terminal device in an IoT system. An IoT is an important part in future development of information technologies. A main technical feature of the IoT is to connect things to a network by using a communication technology, to implement an intelligent network for human-machine interconnection and thing-thing interconnection. In embodiments of this application, an IoT technology may implement massive connections, deep coverage, and terminal power saving by using, for example, a narrow band (narrow band, NB) technology.

In addition, in embodiments of this application, the terminal device may further include a sensor such as an intelligent printer, a train detector, or a gas station. Main functions of the terminal device include collecting data (for some terminals), receiving control information and downlink data from a network device, sending an electromagnetic wave, and transmitting uplink data to the network device.

Optionally, in embodiments of this application, the network device may be any communication device that has a wireless transceiver function and that is configured to communicate with the terminal. The network device includes but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB, a TRP, or a TP in the 5G system, or one or a group of antenna panels (including a plurality of antenna panels) of a base station in the 5G system. In addition, the network device may alternatively be a network node included in a gNB or a TP, for example, a BBU or a distributed unit (distributed unit, DU).

In some deployments, a gNB may include a central unit (central unit, CU) and a DU. In addition, the gNB may alternatively include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical layer (physical layer, PHY). The AAU implements some physical layer processing functions, radio frequency processing, and a function related to an active antenna. Information at the RRC layer eventually becomes information at the PHY layer, or is changed from information at the PHY layer. Therefore, in this architecture, higher-layer signaling such as RRC layer signaling may also be considered as being sent by the DU or sent by the DU and the AAU. It may be understood that the network device may be a device including one or more of a CU node, a DU node, and an AAU node.

Optionally, the network device and the terminal device in embodiments of this application may communicate with each other by using a licensed spectrum, may communicate with each other by using an unlicensed spectrum, or may communicate with each other by using both the licensed spectrum and the unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

Optionally, the terminal device or the network device in embodiments of this application may be deployed on land, and include an indoor, outdoor, handheld, or vehicle-mounted device; may be deployed on water; or may be deployed on an airplane, a balloon and a satellite in the air. Application scenarios of the terminal device or the network device are not limited in embodiments of this application.

It should be understood that, in this embodiment of this application, the terminal device or the network device includes a hardware layer and an operating system layer running above the hardware layer, and an application layer running above the operating system layer. The hardware layer includes hardware such as a central processing unit (central processing unit, CPU), a memory management unit (memory management unit, MNW), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In other words, in embodiments of this application, related functions of the terminal device or the network device may be implemented by one device, may be jointly implemented by a plurality of devices, or may be implemented by one or more function modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

For example, the related function of the terminal device or the network device in embodiments of this application may be implemented by a communication apparatus 300 in FIG. 4. FIG. 4 is a schematic diagram of a structure of the communication apparatus 300 according to an embodiment of this application. The communication apparatus 300 includes one or more processors (for example, a processor 301 and a processor 306), a communication line 302, and at least one communication interface (FIG. 4 is merely an example in which the communication apparatus includes a communication interface 304 and one processor 301). Optionally, the communication apparatus 300 may further include a memory 303.

The processor 301 may be a central processing unit (central processing unit, CPU), a microprocessor, an application-specific integrated circuit (application-specific integrated circuit, ASIC), or one or more integrated circuits configured to control execution of a program in the solutions in this application.

The communication line 302 may include a path used to connect different components.

The communication interface 304 may be a transceiver module configured to communicate with another device or a communication network, for example, the Ethernet, a RAN, or a wireless local area network (wireless local area networks, WLAN). For example, the transceiver module may be an apparatus such as a transceiver or a transceiver.

Optionally, the communication interface 304 may alternatively be an interface circuit located in the processor 301, and is configured to implement signal input and signal output of the processor.

The memory 303 may be an apparatus having a storage function, for example, may be a read-only memory (read-only memory, ROM) or another type of static storage device that can store static information and instructions, or a random access memory (random access memory, RAM) or another type of dynamic storage device that can store information and instructions. The memory may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or magnetic disk storage medium or another magnetic storage device, or any other medium that can be used to carry or store expected program code in a form of instructions or a data structure and that is accessible by a computer, but is not limited thereto. The memory may exist independently, and is connected to the processor through the communication line 302. The memory may alternatively be integrated with the processor.

The memory 303 is configured to store computer-executable instructions for performing the solutions in this application, and the processor 301 controls execution. The processor 301 is configured to execute the computer-executable instructions stored in the memory 303, to implement a paging information sending method and a paging information monitoring method provided in embodiments of this application.

Alternatively, in embodiments of this application, the processor 301 may implement a processing-related function in the paging information sending method and the paging information monitoring method provided in the following embodiments of this application, and the communication interface 304 may be responsible for communicating with the another device or the communication network. This is not specifically limited in embodiments of this application.

The computer-executable instructions in embodiments of this application may alternatively be referred to as application program code. This is not specifically limited in embodiments of this application.

During specific implementation, in an embodiment, the processor 301 may include one or more CPUs such as a CPU 0 and a CPU 1 in FIG. 4.

During specific implementation, in an embodiment, the communication apparatus 300 may include a plurality of processors, for example, the processor 301 and a processor 306 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 300 may further include an output device 305 and an input device 307. The output device 305 communicates with the processor 301, and may display information in a plurality of manners.

The communication apparatus 300 may be a general-purpose apparatus or a dedicated apparatus. For example, the communication apparatus 300 may be a desktop computer, a portable computer, a network server, a palmtop computer (personal digital assistant, PDA), a mobile phone, a tablet computer, a wireless terminal, an embedded device, or a device having a structure similar to that in FIG. 4. A type of the communication apparatus 300 is not limited in embodiments of this application.

With reference to FIG. 1 to FIG. 9, the following describes in detail the paging information sending method and the paging information monitoring method provided in embodiments of this application.

It should be noted that names of messages between network elements, names of parameters in the messages, or the like in following embodiments of this application are merely examples, and there may alternatively be other names in a specific implementation. This is not specifically limited in embodiments of this application.

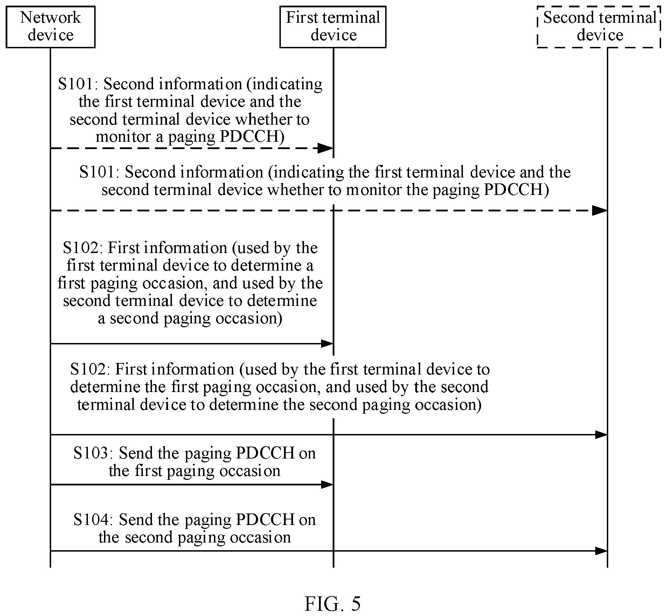

As shown in FIG. 5, an embodiment of this application provides a paging information sending method and a paging information monitoring method. For example, the methods include the following steps.

It should be noted that, before the method or steps provided in this embodiment of this application are implemented, a network device may preconfigure POs for a plurality of UEs in coverage of the network device. For example, the network device preconfigures K groups of POs. As described above, each group of POs periodically appears, and a cycle of each group of POs is a paging DRX cycle. The network device may preconfigure the PO for the UE by using a SIB 1 and/or another system message, and/or preconfigure the PO for the UE by using RRC signaling when the UE is in an RRC connected mode. The RRC signaling may also have another name, for example, an RRC message.

S101: The network device sends second information. Correspondingly, first UE and second UE receive the second information.

Before the network device sends the second information, the network device may preconfigure POs for the first UE and the second UE. For example, a PO configured for the first UE is referred to as a first configured PO group or a group of first configured POs. In consideration of a current paging cycle, the first configured PO is a paging occasion configured by the network device for the first UE to monitor a paging PDCCH in the current paging cycle.

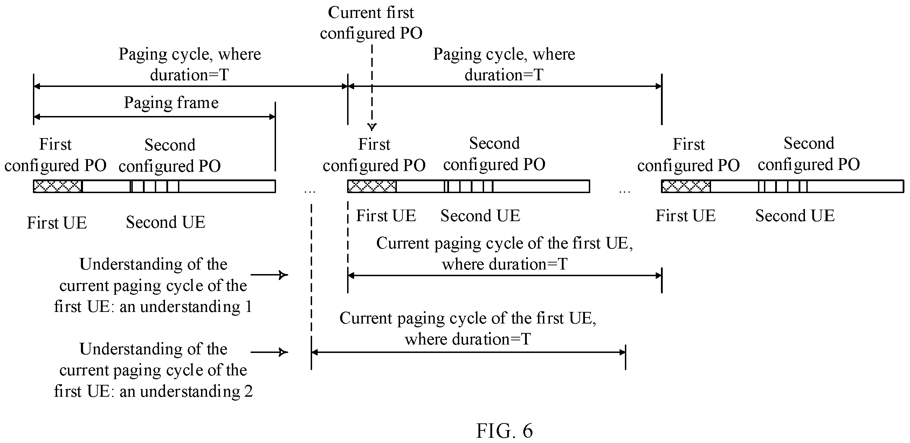

FIG. 6 shows an understanding of the current paging cycle of the first UE. The current paging cycle of the first UE may be understood as a time period whose duration is a paging cycle and that covers a next first configured PO after the first UE completes paging information monitoring in a previous paging cycle.

Specifically, the network device semi-statically configures the following information for each UE: a paging cycle T, a quantity N of paging frames (paging frames) included in each paging cycle T, a quantity Ns of paging occasions in each paging frame, and a paging frame offset PF_offset for calculating a paging frame. Each UE may calculate, according to a formula 1 and a formula 2, a group of POs configured for the UE to monitor the paging PDCCH. For example, the network device configures a PO 1 for UE 1 to UE 10 to monitor the paging PDCCH, and a PO 2 for UE 11 to UE 20 to monitor the paging PDCCH.

Although the network device configures a group of first configured POs for the first UE, the network device does not necessarily send the paging PDCCH on the first configured PO in each paging cycle. In this embodiment, the network device sends the second information before the first configured PO in each paging cycle, or at a time domain resource position the same as that of the first configured PO in each paging cycle. The second information may be the PEI. The second information indicates the first UE whether to monitor the paging PDCCH in the current paging cycle. When the second information indicates the first UE not to monitor the paging PDCCH in the current paging cycle, the first UE may learn, as early as possible, that the first UE is not paged, so that the first UE returns to a sleep state as soon as possible, to reduce power consumption.

It may be understood that, that the network device sends the paging PDCCH or sends a PDCCH may have other descriptions. For example, the network device sends paging information on a PDCCH, the network device sends paging DCI on a PDCCH, or the network device sends DCI on a PDCCH.

A sending cycle and a time-frequency domain position of the second information may be predefined in a protocol, or may be configured by the network device. For example, if the network device does not pre-send a related parameter for configuring the second information, the terminal device does not receive the second information, and the network device does not send the second information either.

Similarly, although the network device configures a group of second configured POs for the second UE, the network device does not necessarily send the paging PDCCH on the second configured PO in each paging cycle. In this embodiment, the network device sends the second information before the second configured PO in each paging cycle, or at a time domain resource position the same as that of the second configured PO in each paging cycle. The second information may be the PEI. The second information indicates the second UE whether to monitor the paging PDCCH. When the second information indicates the second UE not to monitor the paging PDCCH, the second UE may learn, as early as possible, that the second UE is not paged, so that the second UE returns to a sleep state as soon as possible, to reduce power consumption.

It may be understood that the first UE and the second UE are merely examples, and the network device may further send the second information to more UEs in the coverage of the network device. In addition, the second information may be information sent to one or more groups of UEs. To be specific, the solution of this embodiment is applicable to a case in which one piece of second information covers a plurality of configured POs. A time domain position of the second information may be as follows:

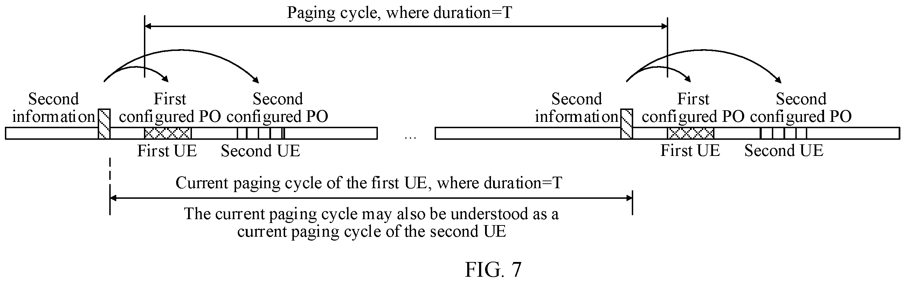

In consideration of the current paging cycle, the second information may be before the plurality of covered configured POs, for example, before the 1st configured PO in the plurality of covered configured POs. As shown in FIG. 7, in the current paging cycle (of the first UE), the second information covers the first configured PO and the second configured PO.

It may be understood that, that the second information covers a plurality of configured POs means that the second information covers a plurality of groups of UEs that are configured to monitor the paging PDCCH on the plurality of configured POs, and the second information indicates the plurality of covered groups of UEs whether to monitor the paging PDCCH. In this case, the plurality of covered groups of UEs need to monitor or receive the second information.

The second information may cover the plurality of POs in another implementation form. For example, the second information has effective duration, an effective range, or an effective time window. The second information indicates UE configured to monitor the paging PDCCH in the effective duration of the second information whether to monitor the paging PDCCH. In other words, the UE configured to monitor the paging PDCCH in the effective duration of the second information needs to monitor the second information.

The effective duration may be predefined or configured. In addition, if the network device does not configure the effective duration of the second information, the second information may use default effective duration. A unit of the effective duration may be a quantity of configured POs (namely, the effective range of the second information). For example, the effective range of the second information is M POs adjacently after the second information, where M is greater than or equal to 1, or M is greater than or equal to 2. Alternatively, the unit of the effective duration may be a time length, and a unit of the time length may be a subframe, a millisecond (ms), or the like. For example, the effective range of the second information is a configured PO that is after the second information and that is in the effective duration of the second information. A start moment of the effective duration may be predefined or configured. The start moment of the effective duration may be a next symbol, a next subframe, or a next slot of the second information, a start moment of the 1st configured PO after the second information, a start moment of a subframe/slot (slot) in which the second information is located, a start moment of a radio frame in which the second information is located, or the like.

Alternatively, the time domain position of the second information may be the same as that of the 1st configured PO in the plurality of covered configured POs. For example, the network device sends two PDCCHs (or two pieces of DCI) on the 1st configured PO, where one PDCCH carries the second information, and the other PDCCH carries the paging DCI. For another example, the network device sends one PDCCH (or one piece of DCI) on the 1st configured PO. The PDCCH is the paging PDCCH, and information carried on the PDCCH is the paging DCI. The second information is an information domain field in the paging DCI, for example, an information domain field that is not used in the paging DCI, a newly added information domain field, or a field obtained after one or more information domain fields are reinterpreted.

In an implementation, the second information is carried on a PDCCH, and the PDCCH carrying the second information is scrambled by using a paging-radio network temporary identifier (paging-radio network temporary identifier, P-RNTI). In another implementation, the second information is carried on a PDCCH, and an RNTI for scrambling the PDCCH carrying the second information is different from a P-RNTI.

A signal type of the second information may be as follows:

The second information may be indication information that is based on a PDCCH, and is carried on the PDCCH. For example, the second information is DCI carried on a PDCCH, or an information domain field in DCI carried on a PDCCH.

The second information may alternatively be indication information that is based on a sequence. For example, the sequence is a reference signal sequence. Specifically, a signal type of the reference signal may be a CSI-RS, a tracking reference signal (tracking reference signal, TRS), a secondary synchronization signal (secondary synchronization signal, SSS), or another reference signal sequence. When the sequence is scrambled by using different scrambling information, for example, has different scrambling numbers, the sequence indicates different indication states of the second information; and/or, when the sequence is sent in different time domains, the sequence indicates different indication states of the second information; and/or, when the sequence is sent in different frequency domains, the sequence indicates different indication states of the second information.

The first UE receives, before the first configured PO or at the time domain resource position the same as that of the first configured PO, the second information sent by the network device, parses content indicated by the second information, and determines whether the first UE is paged.

The second UE receives, before the second configured PO or at the time domain resource position the same as that of the second configured PO, the second information sent by the network device, parses content indicated by the second information, and determines whether the second UE is paged.

How indication is performed by using the second information is described in detail below.

It may be understood that, in different implementations, alternatively, the network device may not send the second information, or the network device does not configure a function of the second information, and the terminal device does not receive the second information, but directly performs the following steps. Therefore, step 101 is optional, and is represented by a dashed line in the figure.

S102: The network device sends first information.

After the network device configures a group of first configured POs for the first UE and configures a group of second configured POs for the second UE, in this embodiment, the network device may dynamically determine, based on an actual situation, a resource for the first UE and the second UE to monitor the paging PDCCH. Therefore, the network device sends the first information to the first UE and the second UE.

The first information is used by the first UE to determine a first PO for monitoring a PDCCH in the current paging cycle (that is, a PO on which the first UE actually monitors the paging PDCCH in the current paging cycle), and the first information is before the first configured PO or at the time domain resource position the same as that of the first configured PO. The first PO may be the same as or different from the first configured PO. It can be learned that, in this embodiment, the UE may change, based on the first information, a time domain position at which the UE monitors the paging PDCCH, and the first PO may not be the first configured PO determined by the UE based on a semi-static configuration, the formula 1, and the formula 2.

Correspondingly, the first UE receives the first information.

In addition, the first information is further used by the second UE to determine a second PO on which the second UE monitors the paging PDCCH in a current paging cycle of the second UE. The first information is before the second configured PO or at the time domain resource position the same as that of the second configured PO. The second PO may be the same as or different from the second configured PO.

Correspondingly, the second UE receives the first information.

If the network device does not send the paging PDCCH to any UE, the first information sent by the network device may be empty, or the network device does not send the first information.

The network device dynamically changes the time domain position (or the PO position) at which the UE actually monitors the paging PDCCH, to achieve the following beneficial effects: 1. The network device can dynamically determine a resource on which a terminal device monitors the paging PDCCH, so that the network device can more flexibly perform resource allocation. 2. In addition, in a paging cycle, when the network device indicates the terminal device to perform monitoring on a PO before the PO configured for the terminal device, if the terminal device is not paged, the terminal device learns, as early as possible, that the terminal device is not paged, and returns to the sleep state as soon as possible, to reduce power consumption. If the terminal device is paged, the terminal device is paged more quickly, so that a data delay of the terminal device is reduced.

Similarly, similar to the second information, a sending cycle and a time-frequency domain position of the first information may be predefined in a protocol, or may be configured by the network device. For example, if the network device does not pre-send a related parameter for configuring the first information, the terminal device does not receive the first information, and the network device does not send the first information either.

It may be understood that the first UE and the second UE are merely examples, and the network device may further send the first information to more UEs in the coverage of the network device. In addition, the first information may be information sent to one or more groups of UEs. To be specific, the solution of this embodiment is applicable to a case in which one piece of first information covers a plurality of configured POs. A time domain position of the first information may be as follows:

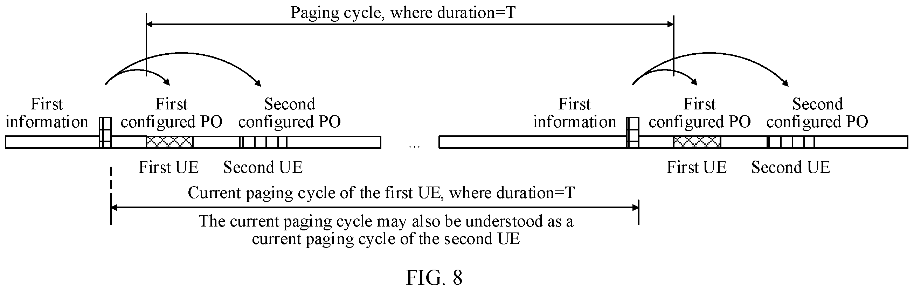

In consideration of the current paging cycle, the first information may be before the plurality of covered configured POs, for example, before the 1st configured PO in the plurality of covered configured POs. As shown in FIG. 8, in the current paging cycle (of the first UE), the first information covers the first configured PO and the second configured PO.

It may be understood that, that the first information covers a plurality of configured POs means that the first information covers a plurality of groups of UEs that are configured on the plurality of configured POs to monitor the paging PDCCH, and th first information is used by the plurality of covered groups of UEs to separately determine a time domain position or a PO for actually monitoring the paging PDCCH in the current paging cycle. In this case, the plurality of covered groups of UEs need to monitor or receive the first information.

The first information may cover the plurality of POs in another implementation form. For example, the first information has effective duration, an effective range, or an effective time window. The first information is used, by UE configured in the effective duration of the first information to monitor the paging PDCCH, to determine a time domain position or a PO for actually monitoring the paging PDCCH in the current paging cycle. In other words, the UE configured in the effective duration of the first information to monitor the paging PDCCH needs to monitor the first information.

The effective duration may be predefined or configured. In addition, if the network device does not configure the effective duration of the first information, the first information may use default effective duration. A unit of the effective duration may be a quantity of configured POs (namely, the effective range of the first information). For example, the effective range of the first information is M POs adjacently after the first information, where M is greater than or equal to 1, or M is greater than or equal to 2. Alternatively, the unit of the effective duration may be a time length, and a unit of the time length may be a subframe, a millisecond (ms), or the like. For example, the effective range of the first information is a configured PO that is after the first information and that is in the effective duration of the first information. A start moment of the effective duration may be predefined or configured. The start moment of the effective duration may be a next symbol, a next subframe, or a next slot of the first information, a start moment of the 1st configured PO after the first information, a start moment of a subframe/slot (slot) in which the first information is located, a start moment of a radio frame in which the first information is located, or the like.

Alternatively, the time domain position of the first information may be the same as that of the 1st configured PO in the plurality of covered configured POs. For example, the network device sends two PDCCHs (or two pieces of DCI) on the 1st configured PO, where one PDCCH carries the first information, and the other PDCCH carries the paging DCI. For another example, the network device sends one PDCCH (or one piece of DCI) on the 1st configured PO. The PDCCH is the paging PDCCH, and information carried on the PDCCH is the paging DCI. The first information is an information domain field in the paging DCI, for example, an information domain field that is not used in the paging DCI, a newly added information domain field, or a field obtained after one or more information domain fields are reinterpreted.

In an implementation, the first information is carried on a PDCCH, and the PDCCH carrying the first information is scrambled by using a paging-radio network temporary identifier (paging-radio network temporary identifier, P-RNTI). In another implementation, the first information is carried on a PDCCH, and an RNTI for scrambling the PDCCH carrying the first information is different from a P-RNTI.

A signal type of the first information may be as follows:
The first information may be indication information that is based on a PDCCH, and is carried on the PDCCH. For example, the first information is DCI carried on a PDCCH, or an information domain field in DCI carried on a PDCCH.

The first information may alternatively be indication information that is based on a sequence. For example, the sequence is a reference signal sequence. Specifically, a signal type of the reference signal may be a CSI-RS, a tracking reference signal (tracking reference signal, TRS), a secondary synchronization signal (secondary synchronization signal, SSS), or another reference signal sequence. When the sequence is scrambled by using different scrambling information, for example, has different scrambling numbers, the sequence indicates different indication states of the first information; and/or, when the sequence is sent in different time domains, the sequence indicates different indication states of the first information; and/or, when the sequence is sent in different frequency domains, the sequence indicates different indication states of the first information;

For how the first UE determines the first PO based on the first information and how the second UE determines the second PO based on the first information, details are described below.

The first information and the second information may be separately in different messages, or may be in different fields of a same message. For example, the first information and the second information are carried on a same PDCCH, or same DCI includes the first information and the second information. For another example, the first information and the second information are carried by different messages, where the second information is carried by a reference signal sequence, and the first information is carried on a PDCCH. For another example, the second information (the first information) is carried on a PDCCH, and the first information (the second information) is carried on a PDSCH scheduled by using the PDCCH. If the first information and the second information are in different fields of a same message, and the second information indicates that the first UE and the second UE do not need to monitor the paging PDCCH, the first information may be set to a specific state, may be reserved for a newly added function in the future, or may indicate another function.

When the first information and the second information are in a same message, the effective ranges (or the effective duration) of the first information and the second information are the same.

S103: The network device sends the paging PDCCH to the first UE on the first PO. Correspondingly, the first UE monitors the paging PDCCH on the first PO.

Specifically, if the second information indicates the first UE to monitor the paging PDCCH, the first UE monitors the paging PDCCH on the first PO.

If the second information indicates the first UE not to monitor the paging PDCCH, the first UE does not monitor the paging PDCCH on the first PO. For the first information, the first UE may ignore the first information.

S104: The network device sends the paging PDCCH to the second UE on the second PO. Correspondingly, the second UE monitors the paging PDCCH on the second PO.

Specifically, if the second information indicates the second UE to monitor the paging PDCCH, the second UE monitors the paging PDCCH on the second PO.

If the second information indicates the second UE not to monitor the paging PDCCH, the second UE does not monitor the paging PDCCH on the second PO. For the first information, the second UE may ignore the first information.

For the first UE, if the second information indicates the first UE to monitor the paging PDCCH, the network device sends the paging PDCCH on the first PO. Correspondingly, the first UE monitors the paging PDCCH on the first PO. The first UE monitors the paging PDCCH. If DCI carried on the PDCCH indicates information for scheduling a PDSCH, the first UE receives and parses the corresponding physical downlink shared channel (physical downlink shared channel, PDSCH). If the first UE fails to blindly detect the DCI or blindly detects the DCI on the paging PDCCH, but the DCI indicates that no PDSCH is scheduled, and the DCI indicates that there is no short message, for example, indicates that there is no system information change, and there is no information related to a public warning system (public warning system, PWS) (for example, indicates that there is no notification related to an earthquake and tsunami warning system (earthquake and tsunami warning system, ETWS) and a commercial mobile alert service (commercial mobile alert service, CMAS)), the first UE considers that there is no paging message, and then enters the sleep state. Until receiving next second information after one paging DRX cycle, the first UE determines, based on the second information, whether to wake up to monitor the paging PDCCH. If the first UE blindly detects the DCI on the paging PDCCH, and the DCI indicates that no PDSCH is scheduled, but the DCI indicates that there is a short message indication, for example, system information changes, the UE performs a corresponding operation based on the short message indication.

If the second information indicates the first UE not to monitor the paging PDCCH, the first UE may learn, as early as possible, that the first UE is not paged, so that the first UE returns to the sleep state as soon as possible, to reduce power consumption. The network device does not add, to the first information, information for the first UE to determine the first PO, and does not send the paging PDCCH and the paging PDSCH, so that resource overheads for sending the paging PDCCH and the paging PDSCH by the network device are reduced.

It may be understood that if the second information indicates the first UE not to monitor the paging PDCCH, but another UE is indicated to monitor the paging PDCCH in the effective range of the second information/the first information, the network device also sends the paging PDCCH.

Similarly, for the second UE, if the second information indicates the second UE to monitor the paging PDCCH, the network device sends the paging PDCCH on the second paging occasion. Correspondingly, the second UE monitors the paging PDCCH on the second paging occasion.

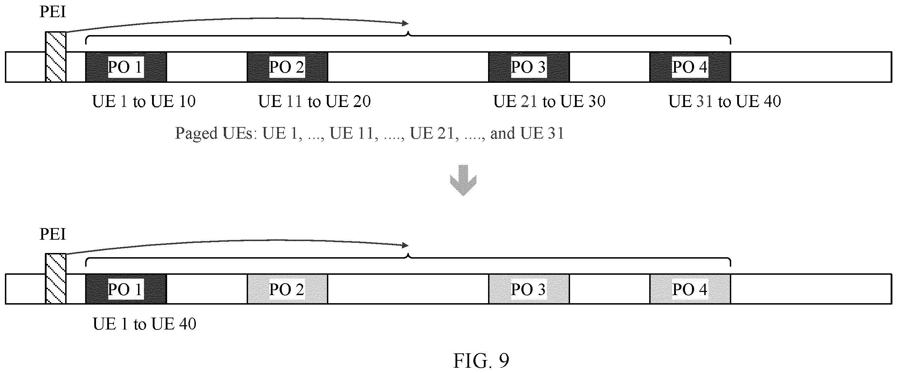

The second information may be the PEI. The introduction of the PEI mechanism increases resource overheads of the network device. Therefore, how to reduce a resource overhead increase caused by the introduction of the PEI is a problem that needs to be further resolved in this application. FIG. 9 is an example of a schematic diagram of resource overheads before and after the solution of this embodiment is implemented. In a current paging cycle, one PEI indication covers four configured POs (PO 1 to PO 4). For each configured PO, one just UE is paged (10 UEs, namely, UE 1 to UE 10, monitor paging information on the PO 1, where paged UE is the UE 1; 10 UEs, namely, UE 11 to UE 20, monitor paging information on the PO 2, where paged UE is the UE 11; 10 UEs, namely, UE 21 to UE 30, monitor paging information on the PO 3, where paged UE is the UE 21; and 10 UEs, namely, UE 31 to UE 40, monitor paging information on the PO 4, where paged UE is the UE 31).

As shown in an upper part in FIG. 9, before the solution of this embodiment is implemented, if the PEI indicates to monitor a paging PDCCH, UE monitors the paging PDCCH on a PO configured for the UE, and a network device needs to send four copies of the paging PDCCH. If a paging PDSCH is scheduled by using the paging PDCCH, the network device further needs to send four copies of the paging PDSCH.

As shown in a lower part in FIG. 9, after the solution of this embodiment is implemented, if the PEI indicates the UE 1 to the UE 40 to monitor the paging PDCCH only on the PO 1, the network device needs to send only one paging PDCCH and one paging PDSCH.

The introduction of the PEI mechanism increases resource overheads of the network device. The solution of this embodiment does not directly reduce resource overheads of the PEI, but reduces resource overheads of the paging PDCCH and the paging PDSCH by using the PEI indication, so that the overall resource overheads of the network device are reduced.

It can be learned that the resource overheads for sending the paging PDCCH and the paging PDSCH by the network device can be reduced by using the PEI indication. In addition, because the network device may reduce a quantity of times for which the paging PDCCH and the paging PDSCH are sent, overheads for sending the PEI by the network device are indirectly reduced.

The following describes in detail how the second information specifically indicates UE whether to monitor the paging PDCCH.

In an implementation, the first UE and the second UE belong to a same UE group or different UE groups in at least two groups of UEs. In the current paging cycle of the first UE and/or the second UE, each of the at least two groups of UEs corresponds to one configured PO, and different UE groups correspond to different configured POs.

The second information covers POs configured for the at least two groups of UEs, and the second information indicates the at least two groups of UEs whether to monitor the paging PDCCH. If the second information indicates the at least two groups of UEs to monitor the paging PDCCH, the at least two groups of UEs monitor the paging PDCCH. In this way, the network device may use few bits to indicate many UEs whether to monitor the paging PDCCH. For example, one bit in the DCI carries the second information. When the bit is set to 1 (or 0), it indicates that the at least two groups of UEs monitor the paging PDCCH. When the bit is set to 0 (or 1), it indicates that neither of the at least two groups of UEs monitors the paging PDCCH.

In the foregoing implementation, the second information does not include grouping indication information, so that signaling overheads of the network device are reduced.

In another implementation, the second information may also be for grouping indication. In this way, UE that needs to monitor the paging PDCCH and UE that does not need to monitor the paging PDCCH can be indicated at a finer granularity, so that power consumption of the UE is reduced. Details are as follows:

In another implementation, the first UE and the second UE belong to a same UE group or different UE groups in at least two groups of UEs. Each of the at least two groups of UEs corresponds to one configured PO, and different UE groups correspond to different configured POs. In the current paging cycle of the first UE and/or the second UE, the second information covers POs configured for the at least two groups of UEs, and the second information indicates each of the at least two groups of UEs whether to monitor the paging PDCCH. For example, a quantity of bits included in the second information is the same as a quantity of UE groups in the at least two groups of UEs. Because each group of UEs corresponds to one configured PO, it may also be considered that the quantity of bits included in the second information is the same as a quantity of configured POs covered by the second information.

In an example, it is assumed that one piece of second information indicates that M configured POs are covered, where M≥1. The second information includes M bits, and each bit corresponds to one group of UEs, or each bit corresponds to one of the plurality of configured POs covered by the second information. For each bit, if the bit is set to 1, it indicates that a group of UEs corresponding to the bit needs to monitor the paging PDCCH, and if the bit is set to 0, it indicates that the group of UEs corresponding to the bit does not need to monitor the paging PDCCH. Alternatively, if the bit is set to 0, it indicates that a group of UEs corresponding to the bit needs to monitor the paging PDCCH, and if the bit is set to 1, it indicates that a group of UEs on a PO corresponding to the bit does not need to monitor the paging PDCCH. In this way, the network device can accurately indicate each group of UEs whether to monitor the paging PDCCH.

In another implementation, the at least two groups of UEs may be further divided into at least three UE subgroups, and the second information indicates each of the at least three UE subgroups whether to monitor the paging PDCCH.

For example, the second information covers M UE groups, and each UE group is further divided into g subgroups. In this case, the M UE groups are divided into g*M UE subgroups in total. The second information includes g*M bits, and each bit corresponds to one of the UE subgroups. In this way, the network device may more accurately indicate a UE subgroup that needs to monitor the paging PDCCH, and a UE subgroup that does not need to monitor the paging PDCCH may enter the sleep state as early as possible, so that power consumption of the UE is reduced.

For another example, a quantity of subgroups into which each UE group is divided may be different. For example, if an $m^{th}$ UE group in the M UE groups is divided into $g_m$ UE subgroups, the M UE groups are divided into $g_1 + g_2 +...+ g_M$ UE subgroups in total. The second information includes $g_1 + g_2 + ... + g_M$ bits, and each bit corresponds to one of the subgroups. In this way, the network device may more accurately indicate a UE subgroup that needs to monitor the paging PDCCH, and a UE subgroup that does not need to monitor the paging PDCCH may enter the sleep state as early as possible, so that power consumption of the UE is reduced.

In another implementation, a UE grouping indication is alternatively indicated by using joint coding. In this way, in consideration of a low probability that some combinations of UE groups or UE subgroups are paged, a separate state may not be designed to map the combination. In this way, overheads of sending the second information by the network device are reduced, and UE that may be paged can reliably receive the second information. This method is referred to as a joint coding indication.

Specifically, UEs covered by the second information are divided into at least two groups of UEs, and there is a first correspondence between a state value of the second information and one UE group or a combination of a plurality of UE groups in the at least two groups of UEs. It may be understood that UE grouping may alternatively be identified by using an index. Therefore, there may alternatively be a first correspondence between a state value of the second information and an index corresponding to one UE group or a combination of a plurality of UE groups in the at least two groups of UEs. The first correspondence is predefined or is configured by using higher layer signaling (for example, RRC signaling, a system message SIB 1, or another system message). The second information indicates a UE group that has the first correspondence with the state value of the second information to monitor the paging PDCCH.

Specifically, the UEs covered by the second information are divided into the at least two groups of UEs, and the at least two groups of UEs may be further divided into at least three UE subgroups. There is a first correspondence between a state value of the second information and one UE subgroup or a combination of a plurality of UE subgroups in the at least three UE subgroups. It may be understood that UE grouping may alternatively be identified by using an index. Therefore, there may alternatively be a first correspondence between a state value of the second information and an index corresponding to one UE subgroup or a combination of a plurality of UE subgroups in the at least three UE subgroups. The first correspondence is predefined or is configured by using higher layer signaling. The second information indicates a UE subgroup that has the first correspondence with the state value of the second information to monitor the paging PDCCH.

During the joint coding indication, the second information may be carried on a PDCCH, or may be carried by a reference signal sequence.

It may be understood that if the state value of the second information does not have the first correspondence with any UE group or UE subgroup, the second information indicates none of the UEs covered by the second information to monitor the paging PDCCH.

In an example, the UEs covered by the second information are divided into eight groups, and the second information may indicate one, two, or more groups of UEs thereof to monitor the paging PDCCH. When the second information indicates one group of UEs thereof to monitor the paging PDCCH, $C_8^1 = 8$ state values of the second information indicate a specific group on which a PDCCH is paged. When the second information indicates two groups of UEs (a combination of the two groups) thereof to monitor the paging PDCCH, $C_8^2 = 28$ state values of the second information indicate two specific groups (a combination of the two groups) to monitor the paging PDCCH. When the second information indicates three groups of UEs (a combination of the three groups) thereof to monitor the paging PDCCH, $C_8^3 = 56$ state values of the second information indicate three specific groups (a combination of the three groups) to monitor the paging PDCCH. When the second information indicates four groups of UEs (a combination of the four groups) thereof or more than four groups of UEs to monitor the paging PDCCH, because a probability that four or more groups in the eight groups are simultaneously paged is low, only one state value of the second information needs to indicate this case. Therefore, in this example, the second information includes 94 states. A correspondence between the state value of the second information and a UE group, or a correspondence between the state value of the second information and an index of a UE group is shown in Table 1 below.

**Table 1**

| UE grouping joint coding indication (where for example, the UEs covered by the second information are divided into eight groups) | |
|---|---|
| **State value of the second information** | **Meaning (a UE group that needs to monitor the paging PDCCH)** |
| 1st state | No UE needs to monitor the paging PDCCH. |
| 2nd state to 9th state | $C_8^1 = 8$, respectively corresponding to cases in which one group in the eight groups is paged |
| 10th state to 37th state | $C_8^2 = 28$, respectively corresponding to cases in which two groups in the eight groups are paged |
| 38th state to 93rd state | $C_8^3 = 56$, respectively corresponding to cases in which three groups in the eight groups are paged |
| 94th state | A probability that four or more groups in the eight groups are simultaneously paged is low. Therefore, only one state needs to indicate this case. |

That the second information indicates the 94th state may also be understood as that the second information indicates that all the UEs covered by the second information need to monitor the paging PDCCH.

Based on the foregoing joint coding indication, if the second information is carried on the PDCCH, a quantity of required bits may be calculated as: $\lceil \log_2^{94} \rceil = 7$. However, if each bit corresponds to one UE group, eight bits are required. It can be learned that the joint coding indication can reduce signaling overheads of the network device.

When the UE fails to monitor the second information, behavior of the UE may be predefined in a protocol or configured by the network device. For a case in which the behavior of the UE is configured by the network device, if the network device does not configure the behavior when the UE fails to monitor the second information, default behavior may be specified in a protocol.

For example, that the second information fails to be monitored may indicate that the UE covered by the second information does not need to monitor the paging PDCCH in the current paging cycle. In this way, when none of the UEs covered by the second information is paged, the network device may choose not to send the second information, to save a resource of the network device and reduce power consumption.

For example, that the second information fails to be monitored may indicate that the UE monitors the paging PDCCH on a PO preconfigured for the UE.

The foregoing describes an indication of the second information. The following describes in detail how the first UE determines the first PO based on the first information.

In an implementation, it is assumed that the first UE and the second UE belong to a same UE group or different UE groups in at least two groups of UEs. Each of the at least two groups of UEs corresponds to one configured PO, and different UE groups correspond to different configured POs. In this case, in the current paging cycles/cycle of the first UE and/or the second UE, the first PO/the second PO is one of POs configured for the at least two groups of UEs. For example, the first UE belongs to a first group of UEs, the second UE belongs to a second group of UEs, the first configured PO is configured for the first group of UEs, and the second configured PO is configured for the second group of UEs. In this case, the first PO may be the first configured PO, and the second PO may also be the first configured PO.

In each paging cycle, the first information covers the POs configured for the at least two groups of UEs. Specifically, in the current paging cycle, when the first information is in a first state, UE that is in the UEs covered by the first information and that is indicated to monitor the paging PDCCH monitors the paging PDCCH on a specific PO in the configured POs covered by the first information.

When the first information is in a second state, UEs that are in the UEs covered by the first information and that are indicated to monitor the paging PDCCH respectively monitor the paging PDCCH on POs respectively configured for the UEs.

The specific PO may be predefined in a protocol, may be configured by the network device, or may be dynamically indicated by the first information.

For example, it is predefined that the specific PO is the 1st PO in the configured POs covered by the first information. For another example, it is predefined that the specific PO is the last PO or the 2nd PO in the configured POs covered by the first information.

For a case in which the network device configures the specific PO, for example, the network device may configure the specific PO to be the 1st PO or an Nth PO in the configured POs covered by the first information.

A default specific PO may be further defined. When the network device does not configure the specific PO to be a configured PO, the specific PO is the default specific PO.

Alternatively, the first information may dynamically indicate the specific PO. For example, when the first information covers four configured POs, the first information is carried by two or three bits, and the two or three bits indicate one of the four configured POs that is used as the specific PO.

In another implementation, the first information indicates that the first PO/the second PO is any one of the POs configured for the at least two groups of UEs. For example, as shown in FIG. 8, the first PO/the second PO may be any one of the first configured PO and the second configured PO.

For example, in the current paging cycle, if the second information covers the configured PO 1 to PO 4, the second information indicates the first UE to monitor the paging PDCCH, and the first information indicates that the first PO is any one of the four configured POs, a format of the first information may be shown in Table 2 below.

**Table 2**

| State value of the first information | Meaning |
| --- | --- |
| 00 | The first UE monitors the paging PDCCH on the PO 1. |
| 01 | The first UE monitors the paging PDCCH on the PO 2. |
| 10 | The first UE monitors the paging PDCCH on the PO 3. |
| 11 | The first UE monitors the paging PDCCH on the PO 4. |

In another implementation, in a paging cycle, the first information indicates that the first PO is either of the first configured PO and a PO that is before the first configured PO in the POs configured for the at least two groups of UEs. The first information covers the POs configured for the at least two groups of UEs.

For example, the first information and the second information are carried by a same message. In the current paging cycle, if the second information covers the configured PO 1 to PO 4, there are four UE groups. The first UE is in a first UE group, the second UE is in a second UE group, third UE is in a third UE group, and fourth UE is in a fourth UE group. The second information indicates the first UE to the fourth UE to monitor the paging PDCCH. For the first UE, because the second information indicates the first UE to monitor the paging PDCCH, the first UE monitors the paging PDCCH on the first configured PO. For the second UE, the first information indicates that the second PO is either of the second configured PO and a PO that is before the second configured PO in the four configured POs (the PO 1 to the PO 4). In this case, one bit is required for indication. For the third UE, the first information indicates that the third PO is either of a third configured PO and a PO that is before the third configured PO in the four configured POs (the PO 1 to the PO 4). In this case, two bits are required for indication. For the fourth UE, the first information indicates that the fourth PO is either of a fourth configured PO and a PO that is before the fourth configured PO in the four configured POs (the PO 1 to the PO 4). In this case, two bits are required for indication. A format of the first information may be shown in Table 3 below.

**Table 3**

| Quantity of bits included in the first information for the four UE groups | State value of the first information | Meaning |
| --- | --- | --- |
| 1 | 0 or 1 | indicating whether the second UE monitors the paging PDCCH on the PO 1 or the PO 2 |
| 2 | Four state values | indicating whether the third UE monitors the paging PDCCH on the PO 1, the PO 2, or the PO 3 |
| 2 | Four state values | indicating whether the four UE monitors the paging PDCCH on the PO 1, the PO 2, the PO 3, or the PO 4 |

It can be learned that, for the first UE group, the first information does not need to include any bit. If UE in the first UE group is indicated to monitor the paging PDCCH, the UE monitors the paging PDCCH on the first configured PO. In this implementation, signaling overheads of the first information can be reduced.

In the foregoing implementation, the first information is before the 1st PO in the POs configured for the at least two groups of UEs or at the time domain resource position the same as that of the 1st PO in the POs configured for the at least two groups of UEs. The second information is before the 1st PO in the at least two groups of configured POs or at the time domain resource position the same as that of the 1st PO in the POs configured for the at least two groups of UEs. For example, the second information covers four configured POs (a PO 1 to a PO 4), UE 1 to UE 10 (a first group of UEs) are configured on the PO 1 to monitor the paging PDCCH, and UE 11 to UE 20 (a second group of UEs) are configured on the PO 2 to monitor the paging PDCCH. It is assumed herein that the second information indicates the first UE (for example, the UE 1) and the second UE (for example, the UE 11) to monitor the PDCCH. The first UE and the second UE respectively belong to the first group of UEs and the second group of UEs. The first information is before the PO 1 or at a time domain resource position the same as that of the PO 1. The second information is also before the PO 1 or at the time domain resource position the same as that of the PO 1.

In an implementation, the first UE and the second UE belong to different UE groups in the at least two groups of UEs, and the first PO and the second PO are a same PO. In other words, the first UE and the second UE monitor the paging PDCCH on the same PO. The first PO and the second PO may be one of the POs configured for the at least two groups of UEs. In this way, UEs configured on different configured POs to monitor the paging PDCCH can monitor the paging PDCCH on a same PO, to save a resource of the network device and reduce power consumption.

In another implementation, in the current paging cycle, the first UE and the second UE may belong to a same UE group in the at least two groups of UEs, and the first PO and the second PO are different POs. In other words, the first UE and the second UE monitor the paging PDCCH on the different POs. For example, the first PO may be the first configured PO, and the second PO may be the second configured PO. Certainly, the first PO/the second PO may alternatively be another PO. In this way, the network device can use a time-frequency resource more efficiently, and reduce overheads of the paging PDCCH and the paging PDSCH. In addition, when load is high, that is, when a quantity of simultaneously paged UEs is large, a paging resource may be dynamically allocated to the UE. In this way, a case in which when the UE cannot be paged in the current paging cycle, the UE can be paged only in a subsequent (for example, next) paging cycle can be avoided, so that a delay of the UE can be reduced.

In another implementation, it is assumed that the first UE and the second UE belong to at least two groups of UEs. In one paging cycle, each of the at least two groups of UE corresponds to one configured PO. When the first information is a first state value in the current paging cycle, the first PO is a specified PO in the POs configured for the at least two groups of UEs. For example, the second information covers four configured POs (a PO 1 to a PO 4), UE 1 to UE 10 (a first group of UEs) are configured on the PO 1 to monitor the paging PDCCH, and UE 11 to UE 20 (a second group of UEs) are configured on the PO 2 to monitor the paging PDCCH. The specified PO may be any one of the PO 1 to the PO 4.

Optionally, the specified PO may be the second PO or another specified PO.

If the second information indicates UE in the UEs covered by the second information to monitor the paging PDCCH, the UE monitors the paging PDCCH on the specified PO.

Specifying of the first PO may be rule by a protocol, configured by a higher layer, or dynamically indicated. For example, it may be specified in the protocol that the first PO is the 1st PO in at least one configured PO covered by the second information. For another example, the network device may configure, by using higher layer signaling (for example, a system message), that the first PO is an $n^{th}$ PO in at least one configured PO covered by the second information. Alternatively, the network device may dynamically indicate the first PO. For example, the first information or the second information may further indicate that the first PO is an $n^{th}$ PO in at least one configured PO covered by the second information/the first information. In other words, the first PO is a PO indicated by the first information or the second information in the POs configured for the at least two groups of UEs.

When the second information is a second state value, the first PO may be the first configured PO. In this case, the first UE monitors the paging PDCCH on the first configured PO according to an existing mechanism.

When the second information indicates that there is no paging information (in other words, there is no paging information on the configured PO covered by the second information), it is clear that neither of the at least two groups of UEs needs to monitor the paging PDCCH, and the at least two groups of UEs may return to the sleep state to reduce power consumption.

It may be understood that the first UE and the second UE are merely used as examples above. The first information may indicate a PO for monitoring the paging PDCCH by UE in a UE group or a UE subgroup. For example, the first information includes a plurality of information fields, where each information field includes one or more bits, and each information field corresponds to one UE group or one UE subgroup. If the second information indicates a UE group or a UE subgroup to monitor the paging PDCCH, all UEs in the UE group or the UE subgroup monitor the paging PDCCH on a PO indicated or determined in an information field that corresponds to the UE group or the UE subgroup and that is in the first information.

In another implementation, in one paging cycle, the first information covers the POs configured for the at least two groups of UEs, and the first information indicates or is for determining a quantity P of POs, on which there is the paging information, in the POs configured for the at least two groups of UEs, where P is greater than or equal to 0, or P is greater than or equal to 1. For example, in the current paging cycle, the first information covers M configured POs, and the first information may dynamically indicate that there are actually only P POs on which there is the paging information, where P is less than or equal to M. For example, P=1 indicates that M POs are configured for the at least two groups of UEs, but the network device sends the paging information on only one of the POs. All UEs that are in the at least two groups of UEs and that are indicated to monitor the paging PDCCH monitor the paging PDCCH on one PO thereof. For example, P may also be set to 0, and it indicates that none of the at least two groups of UEs needs to monitor the paging PDCCH.

It may be understood that when the network device indicates that there is the paging information on a PO, it indicates that the network device sends the paging PDCCH or sends paging DCI on the PO, or it indicates that the network device sends the paging PDCCH on the PO, and a paging PDSCH is scheduled by using the paging PDCCH.

Specific positions of the P POs may be indicated by the first information, may be configured by using higher layer signaling, or may be predefined in a protocol. For example, in the current paging cycle, it is predefined in the protocol that the P POs are first P POs in the POs configured for the at least two groups of UEs. For another example, when the first information indicates that there is the paging information on the P POs, the network device may preconfigure relative positions of the P POs in the M POs by using the higher layer signaling.

A value range of P may be [1, 2, 3, ..., M], and there are M values in total. M is a quantity of configured POs covered by the first information in one paging cycle.

Alternatively, a value range of P is a value range formed by Q (where Q<M) natural numbers in M natural numbers from 0 to M. To be specific, the value range is [0, 1, 2, 3, ..., Q], and there are Q values in total, where Q<M, for example, Q=3.

For another example, the value range is [1, M], and there are two values in total.

After receiving the second information and the first information, how the first UE specifically determines a PO on which the paging PDCCH is monitored. Specifically, in the current paging cycle, if the second information indicates the first UE to monitor the paging PDCCH, the first PO is an $(x+1)^{th}$ PO in the P POs on which there is the paging information, where x is greater than or equal to 0, and a value of x is determined by using at least one of the following parameters: an identification number (UE1_ID) of the first terminal device and a value of P.

When P=1, it is clear that all UEs that are in the at least two groups of UEs and that are indicated to monitor the PDCCH monitor the PDCCH on the indicated or determined PO on which there is the paging information.

When 1<P<M, how is a PO on which UE that is in the at least two groups of UEs and that is indicated to monitor the PDCCH actually monitors the PDCCH distributed among the P POs?

In an implementation, the first UE calculates, based on the UE1_ID and the parameter P, a specific PO on which monitoring is performed in the P POs.

For example, the first UE monitors the paging PDCCH on the $(x+1)^{th}$ PO in the P POs, and a calculation formula of x is the following formula 3 or formula 4:

$$x=\text{floor } (UE\_ID/N) \text{ mod } P, \quad \ldots\text{Formula 3}$$

or

$$x=UE\_ID \text{ mod } P. \qquad\qquad\qquad \ldots\text{Formula 4}$$

In another implementation, the first information indicates a quantity Ns of POs in a paging frame in which the POs configured for the at least two groups of UEs are located. In other words, Ns may be dynamically changed by using the first information. When Ns preconfigured by the network device is greater than 1, for example, when Ns=2 or Ns=4, in this implementation, a quantity of POs can be dynamically reduced, so that a resource of the network device is saved and power consumption is reduced.

Specifically, in the current paging cycle, if the first information indicates that the quantity of POs in the paging frame in which the covered POs are located is Ns, it indicates that the network device sends the paging PDCCH on first Ns configured POs in the paging frame in which the POs covered by the first information are located, or it indicates that the network device may send the paging PDCCH on first Ns configured POs in the paging frame in which the POs covered by the first information are located.

In a specific implementation of this implementation, the quantity Ns of POs in the paging frame in which the POs configured for the at least two groups of UEs are located is indicated by using the first information, and the foregoing value P may alternatively be indirectly determined. For example, in the current paging cycle, the first information covers Z paging frames, and the value Ns dynamically indicated by the first information is represented as Ns_new. In this case, it may be determined that P=Z*Ns_new.

In this case, UE indicated to monitor the paging PDCCH may monitor, by using the foregoing formula 3 and formula 4, the paging PDCCH on the $(x+1)^{th}$ PO in the P POs on which there is the paging information.

In another specific implementation of this implementation, in the current paging cycle, the first information covers Z paging frames, the value Ns dynamically indicated by the first information is represented as Ns_new, and Ns preconfigured by the network device is represented as Ns_old. For the first UE in the at least two groups of UEs covered by the first information, if the first UE is preconfigured to monitor the paging PDCCH on one of Ns_old configured POs in a $q^{th}$ paging frame in the Z paging frames covered by the first information, and if the first UE is indicated by the second information to monitor the paging PDCCH, the first UE monitors the paging PDCCH on one of first Ns_new paging frames in the $q^{th}$ paging frame in the Z paging frames covered by the first information. A specific configured PO on which monitoring is performed may be determined by the first UE based on the foregoing formula 1 and formula 2.

In another implementation, in one paging cycle, the first information indicates whether there is paging information on each of the POs configured for the at least two groups of UEs. For example, each PO covered by the first information corresponds to one bit in the first information. When the bit corresponds to a first state value, it indicates that there is a paging PDCCH on the PO. When the bit corresponds to a second state value, it indicates that there is no paging PDCCH on the PO.

It is clear that, in the current paging cycle, the quantity P of POs on which there is the paging information in the configured POs covered by the first information is equal to a quantity of bits that are in the first information and that are set to the first state value. For example, in the current paging cycle, the first information covers four configured POs, the first information has four bits, and the four bits respectively correspond to the four configured POs. Two bits thereof are set to the first state value, and the other two bits are set to the second state value. In this case, P=2.

After the value P is determined in the current paging cycle, the UE that is in the UEs covered by the first information and that is indicated to monitor the paging PDCCH may determine, according to the foregoing method, a specific one of the P POs on which there is the paging information, to monitor the paging PDCCH. For example, the specific PO is determined according to the formula 3 or formula 4.

In another implementation, a second correspondence may further be preconfigured by using higher layer signaling, or predefined in a protocol. The second correspondence includes a correspondence between the state value of the first information and one PO or a combination of a plurality of POs in the POs configured for the at least two groups of UEs, or a correspondence between the state value of the first information and an index corresponding to one PO or a combination of a plurality of POs in the POs configured for the at least two groups of UEs. In this case, the first information indicates that there is the paging information on a PO or a PO in a combination of POs, where the PO or the PO in the combination of POs has the second correspondence with the state value of the first information.

For example, the second information covers four configured POs, and the second correspondence may be shown in Table 4 below.

**Table 4**

| State value of the first information | One PO or a combination of a plurality of POs in the POs configured for the at least two groups of UEs |
| --- | --- |
| 00 | PO 1 |
| 01 | PO 1 and PO 2 |
| 10 | PO 1, PO 2, and PO 3 |
| 11 | PO 1, PO 2, PO 3, and PO 4 |

In the current paging cycle, the foregoing value P may be determined based on an indication of the first information and Table 4, and a specific configured PO on which there is the paging information may be determined.

Then, the UE that is in the UEs covered by the first information and that is indicated to monitor the paging PDCCH may determine, according to the foregoing method, a specific one of the P POs on which there is the paging information, to monitor the paging PDCCH. For example, the specific PO is determined according to the formula 3 or formula 4.

In another implementation, in one paging cycle, the first information indicates a quantity P of POs on which there is the paging information in M configured POs covered by the first information. For example, the first information may indicate that P=1, 2, or M. In addition, it is preconfigured by using higher layer signaling or predefined in a protocol that, there is a third correspondence between an $N^{th}$ PO in the P POs on which there is paging information and one PO or a combination of a plurality of POs in the POs configured for the at least two groups of UEs, or there is a third correspondence between an $N^{th}$ PO in the P POs on which there is paging information and an index corresponding to one PO or a combination of a plurality of POs in the POs configured for the at least two groups of UEs.

In the current paging cycle, if UE is indicated to monitor the paging PDCCH, the UE monitors the paging PDCCH on a configured PO that has the third correspondence with a PO configured for the UE and on which there is the paging information.

For example, it is assumed that the first information covers four POs, that is, M=4, the third correspondence may be shown in Table 5 to Table 8 below.

**Table 5**

| P=1 | a PO that is in the configured POs covered by the first information and that has the third correspondence with an $N^{th}$ PO in the P POs on which there is the paging information: |
|---|---|
| N=1 | PO 1, PO 2, PO 3, and PO 4 |

**Table 6**

| P=2 | a PO that is in the configured POs covered by the first information and that has the third correspondence with an $N^{th}$ PO in the P POs on which there is the paging information: |
|---|---|
| N=1 | PO 1 and PO 2 |
| N=2 | PO 3 and PO 4 |

**Table 7**

| P=3 | a PO that is in the configured POs covered by the first information and that has the third correspondence with an $N^{th}$ PO in the P POs on which there is the paging information: |
|---|---|
| N=1 | PO 1 and PO 2 |
| N=2 | PO 3 |
| N=3 | PO 4 |

**Table 8**

| P=4 | a PO that is in the configured POs covered by the first information and that has the third correspondence with an $N^{th}$ PO in the P POs on which there is the paging information: |
|---|---|
| N=1 | PO 1 |
| N=2 | PO 2 |
| N=3 | PO 3 |
| N=4 | PO 4 |

Table 8 indicates that if the first information indicates that P=4, and the second information indicates the UE to monitor the paging PDCCH, the first information indicates the UE to monitor the paging PDCCH on the PO configured for the UE. It may be understood that the third correspondence may not include Table 8. In addition, if a value range of P does not include 3, the third correspondence does not include Table 7.

For example, the value range of P is 1 or 2. For example, the first information is one bit or two bits. If the first information indicates that P=2, based on Table 6, in the current paging cycle, UE that is in UEs configured on the PO 1 and the PO 2 to monitor the paging PDCCH and that is indicated to monitor the paging PDCCH monitors the paging PDCCH on the $1^{st}$ PO in the P POs on which there is the paging information, and UE that is in UEs configured on the PO 3 and the PO 4 to monitor the paging PDCCH and that is indicated to monitor the paging PDCCH monitors the paging PDCCH on the $2^{nd}$ PO in the P POs on which there is the paging information.

It may be understood that if the first information and the second information are in different fields of a same message, and the second information indicates that a UE group or a UE subgroup does not need to monitor the paging PDCCH, an information field that is in the first information and that corresponds to the UE group or the UE subgroup that is indicated by the second information and that does not monitor the paging PDCCH may be set to a specific state, may be reserved for a newly added function in the future, or may indicate another function.

If the second information indicates one UE group or one UE subgroup to monitor the paging PDCCH, an information field that is in the first information and that corresponds to the UE group or the UE subgroup that is indicated by the second information and that monitors the paging PDCCH indicates or is for determining a paging occasion on which the UE group or the UE subgroup actually monitors the paging PDCCH.

The following embodiment describes a specific implementation in which there is no second information.

For example, only the first information is defined in a protocol. Alternatively, the network device configures only the first information. In this case, the network device does not send the second information, and the UE does not monitor the second information.

In an implementation, when the first information is set to the first state value, it indicates that all UEs covered by the first information do not monitor the paging PDCCH in the current paging cycle.

When the first information is set to the second state value, it indicates that, in the current paging cycle, all UEs covered by the first information monitor the paging PDCCH on a specific PO. The specific PO is described above, and details are not described herein again. For example, the specific PO is the 1st PO in the configured POs covered by the first information.

When the first information is set to a third state value, it indicates that, in the current paging cycle, all UEs covered by the first information monitor the paging PDCCH on respectively configured POs.

In another implementation, a fourth correspondence is preconfigured by using higher layer signaling or predefined in a protocol. There is the fourth correspondence between a $y^{th}$ state value of the first information and one or more UE groups or one or more UE subgroups in the at least two groups of terminal devices covered by the first information. In addition, in each paging cycle, there is the fourth correspondence between the $y^{th}$ state value of the first information and one or more POs in the configured POs covered by the first information.

When the first information indicates the $y^{th}$ state value, it indicates that UE that has the fourth correspondence with the $y^{th}$ state value of the first information monitors the paging PDCCH on a PO that has the fourth correspondence with the $y^{th}$ state value of the first information. If there is the fourth correspondence between the $y^{th}$ state value of the first information and P POs (where P is greater than or equal to 2) in the configured POs covered by the first information, the UE may determine, from the P POs according to the method described above, a PO on which the PDCCH actually needs to be monitored. For a specific method, refer to the foregoing descriptions. Details are not described again. For example, the PO is determined by using the formula 3 or formula 4.

When the UE fails to monitor the first information, behavior of the UE may be predefined in a protocol or configured by the network device. For a case in which the behavior of the UE is configured by the network device, if the network device does not configure the behavior when the UE fails to monitor the first information, default behavior may be specified in a protocol.

For example, that the first information fails to be monitored may indicate that the UE covered by the first information does not need to monitor the paging PDCCH in the current paging cycle. In this way, when none of the UEs covered by the first information is paged, the network device may choose not to send the first information, to save a resource of the network device and reduce power consumption.

For example, that the first information fails to be monitored may indicate that the UE monitors the paging PDCCH on a PO preconfigured for the UE.

In addition, if both conventional UE and the UE in this application exist in a system, if the conventional UE and the UE in this application monitor the paging PDCCH on a same PO, and there is a PDCCH on which the conventional UE is paged on the PO, the network device needs to send the paging PDCCH on the PO. In other words, even though the first information indicates that the UE in this application may be changed, to monitor the paging PDCCH on another PO, the network device cannot cancel sending of the paging PDCCH and a PDSCH.

To resolve this problem, for the UE in this application, a mechanism of a PO configured for the UE may be different from a mechanism of a PO configured for the conventional UE. In other words, a configuration manner of a PO resource configured for the UE in this application is different from that of a PO resource configured for the conventional UE, or configuration signaling is different. To be specific, a group of PO resources are configured for the conventional UE, and a group of new PO resources are individually configured for the UE in this application (where for example, a configuration parameter is newly added, or a different configuration information element (information element, IE) is used). The PO resource in this application may include the PO resource configured for the conventional UE, or the PO resource in this application partially overlaps the PO resource configured for the conventional UE, or the PO resource in this application does not overlap the PO resource configured for the conventional UE. To be specific:

The network device sends first configuration information to the conventional UE, where the first configuration information includes configuration information of at least one of the following parameters: a paging cycle, a total quantity of paging frames in each paging cycle, a quantity of paging occasions in each paging frame, and the like.

The network device sends second configuration information to the UE in this application, where the second configuration information includes configuration information of at least one of the following parameters: a paging cycle, a total quantity of paging frames in each paging cycle, a quantity of paging occasions in each paging frame, and the like.

For example, for the conventional UE, the network device configures two POs within 20 ms, and for the UE in this application, the network device configures eight POs within 20 ms.

In an implementation, the first information may indicate whether the UE in this application falls back to the PO resource for the conventional UE, to monitor the paging PDCCH. For example, the UE in this application determines a group of configured POs based on the first configuration information, and determines another group of configured POs based on the second configuration information. In the current paging cycle, the UE may determine, based on an indication of the first information, whether to monitor the paging PDCCH on a PO resource configured by using the first configuration information or monitor the paging PDCCH on a PO resource configured by using the second configuration information.

In another implementation, the UE in this application determines only one group of configured POs based on the second configuration information. Functions of the first information and/or the second information are described in the foregoing embodiments, and details are not described again. The first configuration information is invalid for the UE in this application.

It may be understood that if the conventional UE is paged at a position of a PO of the conventional UE, overheads of the paging PDCCH and the paging PDSCH cannot be reduced on the PO. In this case, the first information indicates that a position of a PO on which the at least two groups of UEs monitor the paging PDCCH need to include at least the PO on which the conventional UE is paged.

It may be understood that, in the foregoing embodiments, methods and/or steps implemented by the terminal device may also be implemented by a component (for example, a chip or a circuit) that can be used in the terminal device, and methods and/or steps implemented by the network device may also be implemented by a component (for example, a chip or a circuit) that can be used in the network device.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the terminal device in the foregoing method embodiments, an apparatus including the foregoing terminal device, or a component that can be used in the terminal device. Alternatively, the communication apparatus may be the network device in the foregoing method embodiments, an apparatus including the foregoing network device, or a component that can be used in the network device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

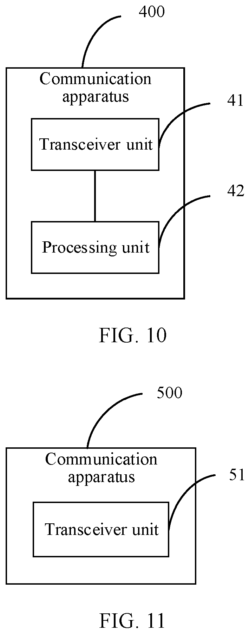

Based on a same concept as the foregoing paging information monitoring method, as shown in FIG. 10, an embodiment of this application further provides a communication apparatus 400. The communication apparatus 400 includes a transceiver unit 41 and a processing unit 42.

The transceiver unit 41 is configured to receive first information, where the first information is used by a first terminal device to determine a first paging occasion for monitoring a physical downlink control channel PDCCH in a current paging cycle, the first information is before a first configured paging occasion or at a time domain resource position the same as that of the first configured paging occasion, and the first configured paging occasion is a paging occasion configured by a network device for the first terminal device to monitor the paging PDCCH in the current paging cycle. The processing unit 42 is configured to monitor the paging PDCCH on the first paging occasion.

Optionally, the transceiver unit 41 is further configured to receive second information, where the second information indicates the first terminal device whether to monitor the paging PDCCH, and the second information is before the first configured paging occasion or at the time domain resource position the same as that of the first configured paging occasion. The processing unit 42 is configured to: if the second information indicates the first terminal device to monitor the paging PDCCH, monitor the paging PDCCH on the first paging occasion.

For specific implementations of the transceiver unit 41 and the processing unit 42, refer to related descriptions of the first terminal device in the embodiment shown in FIG. 5.

According to the communication apparatus provided in this embodiment of this application, the network device may dynamically determine, based on an actual situation, a resource on which the communication apparatus monitors the paging PDCCH. The communication apparatus may monitor the paging PDCCH on the first paging occasion based on a dynamic indication of the network device, to accurately monitor the paging PDCCH.

Based on a same concept as the foregoing paging information sending method, as shown in FIG. 11, an embodiment of this application further provides a communication apparatus 500. The communication apparatus 500 includes a transceiver unit 51.

The transceiver unit 51 is configured to send first information, where the first information is used by a first terminal device to determine a first paging occasion for monitoring a paging physical downlink control channel PDCCH in a current paging cycle, the first information is before a first configured paging occasion or at a time domain resource position the same as that of the first configured paging occasion, and the first configured paging occasion is a paging occasion configured by a network device for the first terminal device to monitor the paging PDCCH in the current paging cycle. The transceiver unit 51 is further configured to send the paging PDCCH to the first terminal device on the first paging occasion.

Optionally, the transceiver unit 51 is further configured to send second information, where the second information indicates the first terminal device whether to monitor the paging PDCCH, and the second information is before the first configured paging occasion or at the time domain resource position the same as that of the first configured paging occasion. The transceiver unit 51 is further configured to: if the second information indicates the first terminal device to monitor the paging PDCCH, send the paging PDCCH to the first terminal device on the first paging occasion.

Optionally, the first information is further used by a second terminal device to determine a second paging occasion for monitoring the paging PDCCH in a current paging cycle of the second terminal device, where the first information is before a second configured paging occasion or at a time domain resource position the same as that of the second configured paging occasion, and the second configured paging occasion is a paging occasion configured by the network device for the second terminal device to monitor the paging PDCCH in the current paging cycle of the second terminal device. The transceiver unit 51 is further configured to send the paging PDCCH to the second terminal device on the second paging occasion.

Optionally, the second information further indicates the second terminal device whether to monitor the paging PDCCH, and the second information is before the second configured paging occasion or at the time domain resource position the same as that of the second configured paging occasion. The transceiver unit 51 is configured to: if the second information indicates the second terminal device to monitor the paging PDCCH, send the paging PDCCH to the second terminal device on the second paging occasion.

For specific implementations of the transceiver unit 51, refer to related descriptions of the network device in the embodiment shown in FIG. 5.

According to the communication apparatus provided in this embodiment of this application, the communication apparatus may dynamically determine, based on an actual situation, a resource on which the terminal device monitors the paging PDCCH, to improve resource utilization. In addition, resource overheads for sending the paging PDCCH and a paging PDSCH by the communication apparatus may be reduced by using a PEI indication, so that overheads for sending the PEI by the network device are indirectly reduced.

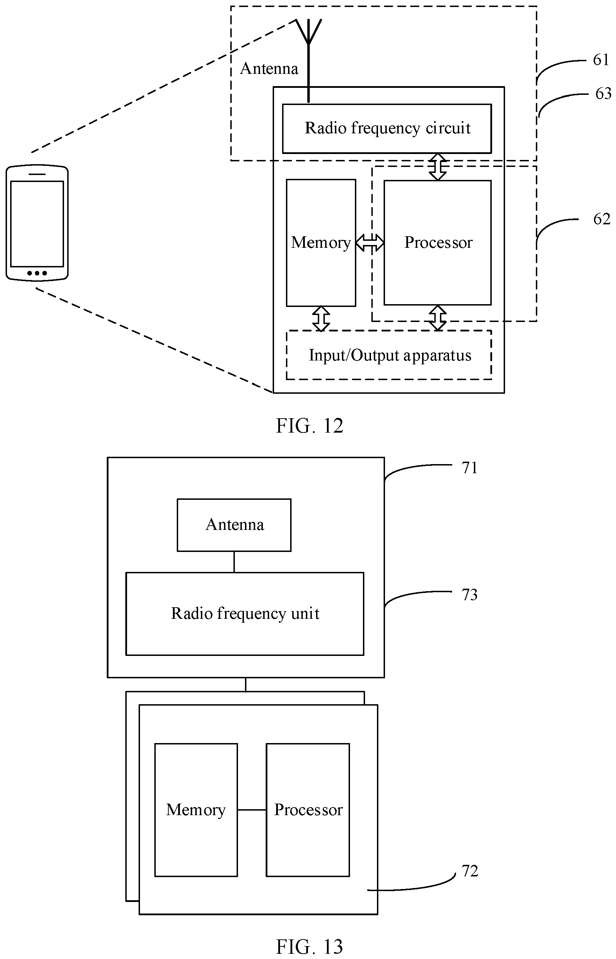

FIG. 12 is a simplified schematic diagram of a hardware structure of a terminal device. For ease of understanding and illustration, an example in which the terminal device is a mobile phone is used in FIG. 12. As shown in FIG. 12, the terminal device includes a processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store a software program and data. These related programs may be loaded into the memory when the communication apparatus is delivered from a factory, or may be loaded into the memory when needed later. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 12 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, an antenna having sending and receiving functions and the radio frequency circuit may be considered as a receiving unit and a sending unit (which may also be collectively referred to as a transceiver unit) of the terminal device, and a processor having a processing function may be considered as a processing unit of the terminal device. As shown in FIG. 12, the terminal device includes a receiving unit 61, a processing unit 62, and a sending unit 63. The receiving unit 61 may also be referred to as a receiver, a receiver machine, a receiving circuit, and the like. The sending unit 63 may also be referred to as a transmitter, a transmitting device, a transmitter machine, a transmitting circuit, and the like. The processing unit may also be referred to as a processor, a processing board, a processing module, a processing apparatus, or the like.

For example, in an embodiment, the receiving unit 61 is configured to perform the actions of the first terminal device in steps S101, S102, and S103 in the embodiment shown in FIG. 5, and the processing unit 62 is configured to perform the action of monitoring the paging PDCCH by the first terminal device in step S103 in the embodiment shown in FIG. 5.

FIG. 13 is a simplified schematic diagram of a hardware structure of a network device. The network device includes a part 72 and a part for radio frequency signal sending/receiving and conversion. The part for radio frequency signal sending/receiving and conversion further includes a receiving unit part 71 and a sending unit part 73 (which may also be collectively referred to as a transceiver unit). The part for radio frequency signal transmission/reception and conversion is mainly configured to: send/receive a radio frequency signal and perform conversion between a radio frequency signal and a baseband signal. The part 72 is mainly configured to: perform baseband processing, control the network device, and the like. The receiving unit 71 may also be referred to as a receiver, a receiver machine, a receiving circuit, and the like. The sending unit 73 may also be referred to as a transmitter, a transmitting device, a transmitter machine, a transmitting circuit, and the like. The part 72 is usually a control center of the network device, may usually be referred to as a processing unit, and is configured to control the network device to perform steps performed by the network device in FIG. 5. For details, refer to the foregoing descriptions of the related parts.

The part 72 may include one or more boards. Each board may include one or more processors and one or more memories. The processor is configured to read and execute a program in the memory to implement a baseband processing function and control the network device. If there are a plurality of boards, the boards may be interconnected to improve a processing capability. In an optional implementation, the plurality of boards may share one or more processors, the plurality of boards may share one or more memories, or the plurality of boards may share one or more processors at the same time.

For example, in an embodiment, the sending unit 73 is configured to perform the actions performed by the network device in steps S101 to S104 in the embodiment shown in FIG. 5.

An embodiment of this application further provides a computer-readable storage medium. The computer-readable storage medium stores instructions. When the instructions are run on a computer, the computer is enabled to perform the foregoing method.

An embodiment of this application further provides a computer program product including instructions. When the computer program product is run on a computer, the computer is enabled to perform the foregoing method.

It should be noted that the foregoing units or one or more of the units may be implemented by using software, hardware, or a combination thereof. When any one of the units or the units is/are implemented by the software, the software exists in a form of computer program instructions, and is stored in a memory. A processor may be configured to execute the program instructions to implement the foregoing method procedures. The processor may be built in a system on chip (system on chip, SoC) or an ASIC, or may be an independent semiconductor chip. In addition to a core for executing software instructions to perform operations or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing units or the unit are/is implemented by the hardware, the hardware may be any one or any combination of a central processing unit (central processing unit, CPU), a microprocessor, a digital signal processor (digital signal processor, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system. The chip system includes at least one processor and an interface. The at least one processor is coupled to a memory through the interface. When the at least one processor executes a computer program or instructions in the memory, the method according to any one of the foregoing method embodiments is performed. Optionally, the chip system may include a chip, or may include a chip and another discrete component. This is not specifically limited in embodiments of this application.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A paging information monitoring method, wherein the method comprises:

    receiving, by a first terminal device, first information, wherein the first information is used by the first terminal device to determine a first paging occasion for monitoring a physical downlink control channel PDCCH in a current paging cycle, the first information is before a first configured paging occasion or at a time domain resource position the same as that of the first configured paging occasion, and the first configured paging occasion is a paging occasion configured by a network device for the first terminal device to monitor the paging PDCCH in the current paging cycle; and

monitoring, by the first terminal device, the paging PDCCH on the first paging occasion.

2. The method according to claim 1, wherein the method further comprises:

receiving, by the first terminal device, second information, wherein the second information indicates the first terminal device whether to monitor the paging PDCCH, and the second information is before the first configured paging occasion or at the time domain resource position the same as that of the first configured paging occasion; and
the monitoring, by the first terminal device, the paging PDCCH on the first paging occasion comprises:
if the second information indicates the first terminal device to monitor the paging PDCCH, monitoring, by the first terminal device, the paging PDCCH on the first paging occasion.

3. A paging information sending method, wherein the method comprises:

sending, by a network device, first information, wherein the first information is used by a first terminal device to determine a first paging occasion for monitoring a paging physical downlink control channel PDCCH in a current paging cycle, the first information is before a first configured paging occasion or at a time domain resource position the same as that of the first configured paging occasion, and the first configured paging occasion is a paging occasion configured by the network device for the first terminal device to monitor the paging PDCCH in the current paging cycle; and
sending, by the network device, the paging PDCCH to the first terminal device on the first paging occasion.

4. The method according to claim 3, wherein the method further comprises:

sending, by the network device, second information, wherein the second information indicates the first terminal device whether to monitor the paging PDCCH, and the second information is before the first configured paging occasion or at the time domain resource position the same as that of the first configured paging occasion; and
the sending, by the network device, the paging PDCCH to the first terminal device on the first paging occasion comprises:
if the second information indicates the first terminal device to monitor the paging PDCCH, sending, by the network device, the paging PDCCH to the first terminal device on the first paging occasion.

5. The method according to any one of claims 1 to 4, wherein the first paging occasion is one of paging occasions configured for at least two groups of terminal devices, and each of the at least two groups of terminal devices corresponds to one or more groups of configured paging occasions.

6. The method according to claim 5, wherein the first information is before the $1^{st}$ paging occasion in the paging occasions configured for the at least two groups of terminal devices, or at a time domain resource position the same as that of the $1^{st}$ paging occasion in the paging occasions configured for the at least two groups of terminal devices.

7. The method according to claim 5 or 6, wherein the second information is before the $1^{st}$ paging occasion in the paging occasions configured for the at least two groups of terminal devices, or at the time domain resource position the same as that of the $1^{st}$ paging occasion in the paging occasions configured for the at least two groups of terminal devices.

8. The method according to any one of claims 3 to 7, wherein

the first information is further used by a second terminal device to determine a second paging occasion for monitoring the paging PDCCH in a current paging cycle of the second terminal device, wherein the first information is before a second configured paging occasion or at a time domain resource position the same as that of the second configured paging occasion, and the second configured paging occasion is a paging occasion configured by the network device for the second terminal device to monitor the paging PDCCH in the current paging cycle of the second terminal device; and
the method further comprises:
sending, by the network device, the paging PDCCH to the second terminal device on the second paging occasion.

9. The method according to claim 8, wherein the second information further indicates the second terminal device whether to monitor the paging PDCCH, and the second information is before the second configured paging occasion or at the time domain resource position the same as that of the second configured paging occasion; and
the sending, by the network device, the paging PDCCH to the first terminal device on the first paging occasion comprises:
if the second information indicates the second terminal device to monitor the paging PDCCH, sending, by the network device, the paging PDCCH to the second terminal device on the second paging occasion.

10. The method according to claim 8 or 9, wherein the first terminal device and the second terminal device belong to different groups of terminal device in the at least two groups of terminal devices, and the first paging occasion and the second paging occasion are a same paging occasion.

11. The method according to claim 8 or 9, wherein the first terminal device and the second terminal device belong to a same group of terminal devices in the at least two groups of terminal devices, and the first paging occasion and the second paging occasion are different paging occasions.

12. The method according to any one of claims 5 to 11, wherein the second information indicates the at least two groups of terminal devices whether to monitor the paging PDCCH;

   the second information indicates each of the at least two groups of terminal devices whether to monitor the paging PDCCH; or
   the at least two groups of terminal devices are divided into at least three subgroups of terminal devices, and the second information indicates each of the at least three subgroups of terminal devices whether to monitor the paging PDCCH.

13. The method according to any one of claims 5 to 11, wherein there is a first correspondence between a state value of the second information and one group of terminal devices or a combination of a plurality of groups of terminal devices in the at least two groups of terminal devices, or there is a first correspondence between a state value of the second information and an index corresponding to one group of terminal devices or a combination of a plurality of groups of terminal devices in the at least two groups of terminal devices, wherein the first correspondence is predefined or is configured by using higher layer signaling; or

   the at least two groups of terminal devices are divided into at least three subgroups of terminal devices, there is a first correspondence between a state value of the second information and one subgroup of terminal devices or a combination of a plurality of subgroups of terminal devices in the at least three subgroups of terminal devices, or there is a first correspondence between a state value of the second information and an index corresponding to one subgroup of terminal devices or a combination of a plurality of subgroups of terminal devices in the at least three subgroups of terminal devices, wherein the first correspondence is predefined or is configured by using higher layer signaling; and
   the second information indicates a group of terminal devices or a subgroup of terminal devices that has the first correspondence with the state value of the second information to monitor the paging PDCCH.

14. The method according to any one of claims 5 to 13, wherein when the first information is a first state value, the first paging occasion is a specified paging occasion in the paging occasions configured for the at least two groups of terminal devices, or the first paging occasion is a paging occasion indicated by the first information or the second information in the paging occasions configured for the at least two groups of terminal devices; and
when the first information is a second state value, the first paging occasion is the first configured paging occasion.

15. The method according to any one of claims 5 to 13, wherein the first information indicates that the first paging occasion is any one of the paging occasions configured for the at least two groups of terminal devices; or
the first information indicates that the first paging occasion is either of the first configured paging occasion and a paging occasion that is before the first configured paging occasion in the paging occasions configured for the at least two groups of terminal devices.

16. The method according to any one of claims 5 to 13, wherein the first information indicates or is for determining a quantity P of paging occasions, on which there is paging information, in the paging occasions configured for the at least two groups of terminal devices, wherein P is greater than or equal to 0.

17. The method according to claim 16, wherein the P paging occasions on which there is paging information are first P paging occasions in the paging occasions configured for the at least two groups of terminal devices.

18. The method according to any one of claims 5 to 13 and 16, wherein the first information indicates a quantity of paging occasions in a paging frame PF in which the paging occasions configured for the at least two groups of terminal devices are located.

19. The method according to any one of claims 5 to 13 and 16, wherein the first information indicates whether there is paging information on each of the paging occasions configured for the at least two groups of terminal devices.

20. The method according to any one of claims 5 to 13 and 16, wherein there is a second correspondence between a state value of the first information and one paging occasion or a combination of a plurality of paging occasions in the paging occasions configured for the at least two groups of terminal devices, or there is a second correspondence between a state value of the first information and an index corresponding to one paging occasion or a combination of a plurality of paging occasions in the paging occasions configured for the at least two groups of terminal devices, and the second correspondence is predefined or is configured by using higher layer signaling; and the first information indicates that there is paging information on a paging occasion or a paging occasion in a combination of paging occasions, wherein the paging occasion or the paging occasion in the combination of paging occasions has the second correspondence with the state value of the first information.

21. The method according to any one of claims 16 to 20, wherein the first paging occasion is an $(x+1)^{th}$ paging occasion in the P paging occasions on which there is paging information, x is greater than or equal to 0, and a value of x is determined by using at least one of the following parameters: an identification number of the first terminal device and a value of P.

22. The method according to any one of claims 16 to 20, wherein there is a third correspondence between an $N^{th}$ paging occasion in the P paging occasions on which there is paging information and one paging occasion or a combination of a plurality of paging occasions in the paging occasions configured for the at least two groups of terminal devices; or there is a third correspondence between an $N^{th}$ paging occasion in the P paging occasions on which there is paging information and an index corresponding to one paging occasion or a combination of a plurality of paging occasions in the paging occasions configured for the at least two groups of terminal devices, and the third correspondence is predefined or is configured by using higher layer signaling; and the first paging occasion is a paging occasion that has the third correspondence with the first configured paging occasion and on which there is paging information.

23. The method according to any one of claims 1 to 22, wherein the first information is downlink control information or a reference signal sequence, and/or the second information is downlink control information or a reference signal sequence.

24. A communication apparatus, comprising:

    a transceiver unit, configured to receive first information, wherein the first information is used by a first terminal device to determine a first paging occasion for monitoring a physical downlink control channel PDCCH in a current paging cycle, the first information is before a first configured paging occasion or at a time domain resource position the same as that of the first configured paging occasion, and the first configured paging occasion is a paging occasion configured by a network device for the first terminal device to monitor the paging PDCCH in the current paging cycle; and
    a processing unit, configured to monitor the paging PDCCH on the first paging occasion.

25. The apparatus according to claim 24, wherein the transceiver unit is further configured to receive second information, wherein the second information indicates the first terminal device whether to monitor the paging PDCCH, and the second information is before the first configured paging occasion or at the time domain resource position the same as that of the first configured paging occasion; and the processing unit is configured to: if the second information indicates the first terminal device to monitor the paging PDCCH, monitor the paging PDCCH on the first paging occasion.

26. A communication apparatus, comprising:

    a transceiver unit, configured to send first information, wherein the first information is used by a first terminal device to determine a first paging occasion for monitoring a paging physical downlink control channel PDCCH in a current paging cycle, the first information is before a first configured paging occasion or at a time domain resource position the same as that of the first configured paging occasion, and the first configured paging occasion is a paging occasion configured by a network device for the first terminal device to monitor the paging PDCCH in the current paging cycle, wherein
the transceiver unit is further configured to send the paging PDCCH to the first terminal device on the first paging occasion.

27. The apparatus according to claim 26, wherein the transceiver unit is further configured to send second information, wherein the second information indicates the first terminal device whether to monitor the paging PDCCH, and the second information is before the first configured paging occasion or at the time domain resource position the same as that of the first configured paging occasion; and
the transceiver unit is further configured to: if the second information indicates the first terminal device to monitor the paging PDCCH, send the paging PDCCH to the first terminal device on the first paging occasion.

28. The apparatus according to any one of claims 24 to 27, wherein the first paging occasion is one of paging occasions configured for at least two groups of terminal devices, and each of the at least two groups of terminal devices corresponds to one or more groups of configured paging occasions.

29. The apparatus according to claim 28, wherein the first information is before the 1st paging occasion in the paging occasions configured for the at least two groups of terminal devices, or at a time domain resource position the same as that of the 1st paging occasion in the paging occasions configured for the at least two groups of terminal devices.

30. The apparatus according to claim 28 or 29, wherein the second information is before the 1st paging occasion in the paging occasions configured for the at least two groups of terminal devices, or at the time domain resource position the same as that of the 1st paging occasion in the paging occasions configured for the at least two groups of terminal devices.

31. The apparatus according to any one of claims 26 to 30, wherein the first information is further used by a second terminal device to determine a second paging occasion for monitoring the paging PDCCH in a current paging cycle of the second terminal device, wherein the first information is before a second configured paging occasion or at a time domain resource position the same as that of the second configured paging occasion, and the second configured paging occasion is a paging occasion configured by the network device for the second terminal device to monitor the paging PDCCH in the current paging cycle of the second terminal device; and
the transceiver unit is further configured to send the paging PDCCH to the second terminal device on the second paging occasion.

32. The apparatus according to claim 31, wherein the second information further indicates the second terminal device whether to monitor the paging PDCCH, and the second information is before the second configured paging occasion or at the time domain resource position the same as that of the second configured paging occasion; and
the transceiver unit is configured to: if the second information indicates the second terminal device to monitor the paging PDCCH, send the paging PDCCH to the second terminal device on the second paging occasion.

33. The apparatus according to claim 31 or 32, wherein the first terminal device and the second terminal device belong to different groups of terminal device in the at least two groups of terminal devices, and the first paging occasion and the second paging occasion are a same paging occasion.

34. The apparatus according to claim 31 or 32, wherein the first terminal device and the second terminal device belong to a same group of terminal devices in the at least two groups of terminal devices, and the first paging occasion and the second paging occasion are different paging occasions.

35. The apparatus according to any one of claims 28 to 34, wherein the second information indicates the at least two groups of terminal devices whether to monitor the paging PDCCH;

the second information indicates each of the at least two groups of terminal devices whether to monitor the paging PDCCH; or
the at least two groups of terminal devices are divided into at least three subgroups of terminal devices, and the second information indicates each of the at least three subgroups of terminal devices whether to monitor the paging PDCCH.

**36.** The apparatus according to any one of claims 28 to 34, wherein there is a first correspondence between a state value of the second information and one group of terminal devices or a combination of a plurality of groups of terminal devices in the at least two groups of terminal devices, or there is a first correspondence between a state value of the second information and an index corresponding to one group of terminal devices or a combination of a plurality of groups of terminal devices in the at least two groups of terminal devices, wherein the first correspondence is predefined or is configured by using higher layer signaling; or

the at least two groups of terminal devices are divided into at least three subgroups of terminal devices, there is a first correspondence between a state value of the second information and one subgroup of terminal devices or a combination of a plurality of subgroups of terminal devices in the at least three subgroups of terminal devices, or there is a first correspondence between a state value of the second information and an index corresponding to one subgroup of terminal devices or a combination of a plurality of subgroups of terminal devices in the at least three subgroups of terminal devices, wherein the first correspondence is predefined or is configured by using higher layer signaling; and
the second information indicates a group of terminal devices or a subgroup of terminal devices that has the first correspondence with the state value of the second information to monitor the paging PDCCH.

**37.** The apparatus according to any one of claims 28 to 35, wherein when the first information is a first state value, the first paging occasion is a specified paging occasion in the paging occasions configured for the at least two groups of terminal devices, or the first paging occasion is a paging occasion indicated by the first information or the second information in the paging occasions configured for the at least two groups of terminal devices; and
when the first information is a second state value, the first paging occasion is the first configured paging occasion.

**38.** The apparatus according to any one of claims 28 to 35, wherein

the first information indicates that the first paging occasion is any one of the paging occasions configured for the at least two groups of terminal devices; or
the first information indicates that the first paging occasion is either of the first configured paging occasion and a paging occasion that is before the first configured paging occasion in the paging occasions configured for the at least two groups of terminal devices.

**39.** The apparatus according to any one of claims 28 to 35, wherein the first information indicates or is for determining a quantity P of paging occasions, on which there is paging information, in the paging occasions configured for the at least two groups of terminal devices, wherein P is greater than or equal to 0.

**40.** The apparatus according to claim 39, wherein the P paging occasions on which there is paging information are first P paging occasions in the paging occasions configured for the at least two groups of terminal devices.

**41.** The apparatus according to any one of claims 28 to 35 and 39, wherein the first information indicates a quantity of paging occasions in a paging frame PF in which the paging occasions configured for the at least two groups of terminal devices are located.

**42.** The apparatus according to any one of claims 28 to 35 and 39, wherein the first information indicates whether there is paging information on each of the paging occasions configured for the at least two groups of terminal devices.

**43.** The apparatus according to any one of claims 28 to 35 and 39, wherein

there is a second correspondence between a state value of the first information and one paging occasion or a combination of a plurality of paging occasions in the paging occasions configured for the at least two groups of terminal devices, or there is a second correspondence between a state value of the first information and an index corresponding to one paging occasion or a combination of a plurality of paging occasions in the paging occasions configured for the at least two groups of terminal devices, and the second correspondence is predefined or is configured by using higher layer signaling; and
the first information indicates that there is paging information on a paging occasion or a paging occasion in a combination of paging occasions, wherein the paging occasion or the paging occasion in the combination of paging occasions has the second correspondence with the state value of the first information.

**44.** The apparatus according to any one of claims 28 to 43, wherein

the first paging occasion is an $(x+1)^{th}$ paging occasion in the P paging occasions on which there is paging information, x is greater than or equal to 0, and a value of x is determined by using at least one of the following parameters: an identification number of the first terminal device and a value of P.

45. The apparatus according to any one of claims 28 to 43, wherein

there is a third correspondence between an $N^{th}$ paging occasion in the P paging occasions on which there is paging information and one paging occasion or a combination of a plurality of paging occasions in the paging occasions configured for the at least two groups of terminal devices; or there is a third correspondence between an $N^{th}$ paging occasion in the P paging occasions on which there is paging information and an index corresponding to one paging occasion or a combination of a plurality of paging occasions in the paging occasions configured for the at least two groups of terminal devices, and the third correspondence is predefined or is configured by using higher layer signaling; and
the first paging occasion is a paging occasion that has the third correspondence with the first configured paging occasion and on which there is paging information.

46. The apparatus according to any one of claims 24 to 45, wherein the first information is downlink control information or a reference signal sequence, and/or the second information is downlink control information or a reference signal sequence.

47. A communication apparatus, comprising a processor, configured to execute a program stored in a memory, wherein when the program is executed, the apparatus is enabled to perform the method according to any one of claims 1 and 2, 5 to 7, and 10 to 23.

48. A communication apparatus, comprising a processor, configured to execute a program stored in a memory, wherein when the program is executed, the apparatus is enabled to perform the method according to any one of claims 3 to 23.

49. A communication system, comprising the communication apparatus according to any one of claims 24 and 25, 28, 30, and 33 to 46, and the communication apparatus according to any one of claims 26 to 46.

50. A computer-readable storage medium, comprising instructions, wherein when the instructions are run on a computer, the method according to any one of claims 1 to 23 is performed.

51. A computer program product, wherein when the computer program product runs on a computer, the method according to any one of claims 1 to 23 is performed.

FIG. 1

Paging DRX cycle=1.28s

Paging frame=10 ms

| PO 1 | | PO 2 | | ... | PO 1 | | PO 2 | |

UE 1 to UE 10    UE 11 to UE 20         UE 1 to UE 10    UE 11 to UE 20

FIG. 2

FIG. 3

FIG. 4

| Network device | First terminal device | Second terminal device |
|---|---|---|

S101: Second information (indicating the first terminal device and the second terminal device whether to monitor a paging PDCCH)

S101: Second information (indicating the first terminal device and the second terminal device whether to monitor the paging PDCCH)

S102: First information (used by the first terminal device to determine a first paging occasion, and used by the second terminal device to determine a second paging occasion)

S102: First information (used by the first terminal device to determine the first paging occasion, and used by the second terminal device to determine the second paging occasion)

S103: Send the paging PDCCH on the first paging occasion

S104: Send the paging PDCCH on the second paging occasion

FIG. 5

FIG. 6

Paging cycle, where duration=T

Second information | First configured PO | Second configured PO

First UE  Second UE

... 

Second information | First configured PO | Second configured PO

First UE  Second UE

Current paging cycle of the first UE, where duration=T

The current paging cycle may also be understood as a
current paging cycle of the second UE

FIG. 7

EP 4 213 547 A1

Paging cycle, where duration=T

First information — First configured PO — Second configured PO

First UE   Second UE

First information — First configured PO — Second configured PO

First UE   Second UE

Current paging cycle of the first UE, where duration=T

The current paging cycle may also be understood as a
current paging cycle of the second UE

FIG. 8

PEI

PO 1    PO 2    PO 3    PO 4

UE 1 to UE 10    UE 11 to UE 20    UE 21 to UE 30    UE 31 to UE 40

Paged UEs: UE 1, ..., UE 11, ...., UE 21, ...., and UE 31

PEI

PO 1    PO 2    PO 3    PO 4

UE 1 to UE 40

FIG. 9

400

Communication apparatus

41

Transceiver unit

42

Processing unit

FIG. 10

500

Communication apparatus

51

Transceiver unit

FIG. 11

Antenna

Radio frequency circuit ——— 61

——— 63

Memory ⇔ Processor ——— 62

Input/Output apparatus

FIG. 12

Antenna ——— 71

Radio frequency unit ——— 73

Memory — Processor

——— 72

FIG. 13

## INTERNATIONAL SEARCH REPORT

International application No.

**PCT/CN2020/119761**

**A. CLASSIFICATION OF SUBJECT MATTER**

H04W 52/02(2009.01)i; H04W 68/02(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 寻呼, 时机, 监听, 唤醒, 信号, 提前, 指示, 之前, 相同, 时域资源, 位置, 物理下行控制信道, paging, opportunity, PO, monitor, waking up, signal, WUS, advance, early, indicate, PEI, previous, same, time domain resource, position, PDCCH

**C. DOCUMENTS CONSIDERED TO BE RELEVANT**

| Category* | Citation of document, with indication, where appropriate, of the relevant passages | Relevant to claim No. |
|---|---|---|
| X | CN 110972237 A (ZHANXUN SEMICONDUCTOR (NANJING) CO., LTD.) 07 April 2020 (2020-04-07) description, paragraphs [0036]-[0119] | 1-51 |
| X | CN 108668359 A (ZTE CORPORATION) 16 October 2018 (2018-10-16) description paragraphs [0131]-[0243] | 1-51 |
| X | WO 2019158603 A1 (SONY CORPORATION) 22 August 2019 (2019-08-22) description page 4 line 39 to page 16 line 28 | 1-51 |
| X | VIVO. "On wake-up signals for feNB-IoT" *3GPP TSG RAN WG1 Meeting #92 R1-1801505*, 02 March 2018 (2018-03-02), sections 1-3 | 1-51 |
| A | WO 2019101539 A1 (NOKIA TECHNOLOGIES OY) 31 May 2019 (2019-05-31) entire document | 1-51 |
| A | US 2020221416 A1 (SONY CORPORATION) 09 July 2020 (2020-07-09) entire document | 1-51 |
| A | WO 2020160272 A1 (QUALCOMM INC.) 06 August 2020 (2020-08-06) entire document | 1-51 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 June 2021** | **25 June 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/119761**

| Patent document cited in search report | | | Publication date (day/month/year) | Patent family member(s) | | | Publication date (day/month/year) |
|---|---|---|---|---|---|---|---|
| CN | 110972237 | A | 07 April 2020 | None | | | |
| CN | 108668359 | A | 16 October 2018 | WO | 2018177004 | A1 | 04 October 2018 |
| | | | | US | 2020029303 | A1 | 23 January 2020 |
| WO | 2019158603 | A1 | 22 August 2019 | EP | 3741167 | A1 | 25 November 2020 |
| WO | 2019101539 | A1 | 31 May 2019 | US | 2020359324 | A1 | 12 November 2020 |
| | | | | CN | 111587590 | A | 25 August 2020 |
| | | | | EP | 3714638 | A1 | 30 September 2020 |
| | | | | IN | 201741042232 | A | 31 May 2019 |
| US | 2020221416 | A1 | 09 July 2020 | EP | 3666003 | A1 | 17 June 2020 |
| | | | | WO | 2019063479 | A1 | 04 April 2019 |
| WO | 2020160272 | A1 | 06 August 2020 | TW | 202034719 | A | 16 September 2020 |
| | | | | US | 2020245246 | A1 | 30 July 2020 |

Form PCT/ISA/210 (patent family annex) (January 2015)